# EUROPÄISCHE PATENTSCHRIFT

(11) **EP 3 946 747 B1**
(45) Veröffentlichungstag und Bekanntmachung des Hinweises auf die Patenterteilung: **07.06.2023**
(21) Anmeldenummer: 20716765.1
(22) Anmeldetag: 01.04.2020
(51) Int. Cl.: B05B 1/16, B05B 1/30, B05B 13/06, B08B 3/02

(54) **UMSCHALTVORRICHTUNG FÜR HOCHDRUCKWERKZEUGE UND REINIGUNGSVORRICHTUNG MIT EINER DERARTIGEN UMSCHALTVORRICHTUNG**
SWITCHING DEVICE FOR HIGH-PRESSURE TOOLS AND CLEANING DEVICE HAVING SUCH A SWITCHING DEVICE
DISPOSITIF DE COMMUTATION POUR OUTILS HYDRAULIQUES À HAUTE PRESSION ET DISPOSITIF DE NETTOYAGE COMPORTANT UN TEL DISPOSITIF DE COMMUTATION

(30) Priorität: 02.04.2019 DE 102019108512
(43) Veröffentlichungstag der Anmeldung: 09.02.2022
(73) Patentinhaber: Ecoclean GmbH, 70794 Filderstadt (DE)
(72) Erfinder: KLINKHAMMER, Norbert, 52159 Roetgen (DE)
(74) Vertreter: Hoeger, Stellrecht & Partner Patentanwälte mbB
(86) Internationale Anmeldenummer: PCT/EP2020/059273
(87) Internationale Veröffentlichungsnummer: WO 2020/201363

(56) Entgegenhaltungen:
- EP-A1- 2 047 912
- EP-A2- 2 656 922
- EP-B1- 2 848 324
- DE-C1- 4 205 273
- US-A1- 2012 080 060

## Beschreibung

Die vorliegende Erfindung betrifft eine Umschaltvorrichtung für Hochdruckwerkzeuge, umfassend eine Halteeinrichtung und zwei oder mehr Hochdruckwerkzeuge für Reinigungszwecke, eine Antriebseinrichtung und einen mittels dieser relativ zur Halteeinrichtung um eine Drehachse drehbaren Drehkörper, eine Verstelleinrichtung, mit der wahlweise eines der Hochdruckwerkzeuge von einer Außerbetriebsstellung in eine Betriebsstellung überführbar ist, in welcher Betriebsstellung das Hochdruckwerkzeug drehfest mit dem Drehkörper gekoppelt und über diesen um eine Werkzeugachse drehend antreibbar ist, wobei die Umschaltvorrichtung einen Zufuhrkanal für unter Druck gesetzte Reinigungsflüssigkeit umfasst oder ausbildet und das jeweilige Hochdruckwerkzeug einen Werkzeugkanal für Reinigungsflüssigkeit umfasst oder ausbildet, der im Betrieb in Strömungsverbindung mit dem Zufuhrkanal steht oder bringbar ist.

Ausführungsformen derartiger Umschaltvorrichtungen sind beispielsweise in der EP 2 047 912 A1, der US 9,643,218 B2 und der EP 2 848 324 B1 beschrieben.

Die vorliegende Erfindung bezieht sich ferner auf eine Reinigungsvorrichtung mit mindestens einer derartigen Umschaltvorrichtung.

Eine Umschaltvorrichtung der eingangs genannten Art wird beispielsweise zur Reinigung von Werkstücken eingesetzt, beispielsweise zur Entfernung von partikulären und/oder filmischen Rückständern oder Verunreinigungen im Anschluss an die Fertigung. Bekannt ist es, dass je nach Reinigungszweck und im Hinblick auf das gewünschte Reinigungsergebnis eines der zwei oder mehr Hochdruckwerkzeuge, die insbesondere hinsichtlich ihrer Reinigungseigenschaften unterschiedlich beschaffen sein können, in die Betriebsstellung überführt wird. In der Betriebsstellung besteht eine Strömungsverbindung typischerweise von einem Pumpaggregat über den Zufuhrkanal und den Werkzeugkanal zu mindestens einer Düse des Hochdruckwerkzeuges. Reinigungsflüssigkeit, insbesondere Wasser, dem zur Steigerung der Reinigungswirkung eine Reinigungschemikalie zugesetzt sein kann, wird über die mindestens eine Düse ausgegeben und beaufschlagt das Werkstück. Das Hochdruckwerkzeug kann über die Verstelleinrichtung ausgewählt werden, wobei sich "Außerbetriebsstellung" im vorliegenden Fall lediglich auf eine Unterscheidung in Bezug auf die "Betriebsstellung" bezieht. Durchaus vorgesehen sein kann, dass ein Hochdruckwerkzeug in seiner Außerbetriebsstellung einen Einsatzzweck erfüllt. In der Betriebsstellung besteht die Möglichkeit, das Hochdruckwerkzeug mittels der Antriebseinrichtung unter Nutzung des Drehkörpers in Rotation zu versetzen, wobei dies für die Reinigung nicht zwingend erforderlich sein muss.

Die Hochdruckwerkzeuge sind beispielsweise zumindest abschnittsweise lanzenförmig ausgestaltet und können auf diese Weise in Hohlräume des Werkstücks für innenliegende Reinigungszwecke eingeführt werden. Es können bei einem Hochdruckwerkzeug zum Beispiel um die Werkzeugachse positionierte Düsen oder ein stirnseitig angeordneter Düsenteller vorgesehen sein. Die Hochdruckwerkzeuge können eine oder mehrere Düsen aufweisen.

Die EP 2 848 324 B1 offenbart eine Umschaltvorrichtung gemäß dem Oberbegriff von Anspruch 1.

Aufgabe der vorliegenden Erfindung ist es, eine Umschaltvorrichtung bereitzustellen, mit der bei konstruktiv einfacher Ausgestaltung ein kompakter Aufbau erzielt werden kann.

Diese Aufgabe wird durch eine Umschaltvorrichtung für Hochdruckwerkzeuge nach Anspruch 1 gelöst.

Bei der erfindungsgemäßen Umschaltvorrichtung ist vorgesehen, dass der Zufuhrkanal, über den die Reinigungsflüssigkeit zugeführt werde kann, zumindest teilweise im Drehkörper gebildet ist. Zusätzlich ist die Ventileinrichtung am Drehkörper angeordnet. Dies bietet die Möglichkeit, mittels der Ventileinrichtung am Drehkörper selbst die Zufuhr von Reinigungsflüssigkeit zu dem die Betriebsstellung einnehmenden Hochdruckwerkzeug freizugeben oder zu sperren. Nimmt ein jeweiliges Hochdruckwerkzeug die Betriebsstellung ein, besteht infolgedessen die Möglichkeit, die Rotation mittels der Antriebseinrichtung über den Drehkörper vorzusehen und die Zufuhr von Reinigungsflüssigkeit durch den Drehkörper hindurch für das jeweilige die Betriebsstellung einnehmende Hochdruckwerkzeug zu steuern. Im Ergebnis ist dadurch die Möglichkeit gegeben, der Umschaltvorrichtung eine kompakte Bauform zu verleihen, weil gesonderte Ventileinrichtungen für die jeweiligen Hochdruckwerkzeuge vorzugsweise eingespart werden können. Der Raumbedarf für zusätzliche Ventileinrichtungen, wie sie beispielsweise bei der in der eingangs genannten US 9,643,218 B2 beschriebenen Umschaltvorrichtung vonnöten sind, ist nicht erforderlich. Infolgedessen kann der Umschaltvorrichtung auch eine einfache konstruktive Ausgestaltung verliehen werden. Dies weist Vorteile hinsichtlich der Herstellungskosten, der Montage, der Ausfallsicherheit und/oder der Wartung auf.

Vorzugsweise wird in der Betriebsstellung des Hochdruckwerkzeuges die dieses haltende Verstelleinrichtung mittels der Ventileinrichtung arretiert und in

Position gehalten. Eine zusätzliche Arretierung, wie sie bei der in der EP 2 848 324 B1 beschriebenen Umschaltvorrichtung erforderlich ist, kann auf diese Weise eingespart werden.

Die Umschaltvorrichtung umfasst insbesondere eine Drehdurchführung für Reinigungsflüssigkeit von der Halteeinrichtung zum Hochdruckwerkzeug - hierbei ist vorteilhafterweise eine nachfolgend erwähnte Dichteinrichtung wirksam -, wobei die Drehdurchführung vorteilhaft mit der am Drehkörper angeordneten Ventileinrichtung gezielt zur Zufuhr von Reinigungsflüssigkeit freigegeben oder im Gegensatz dazu gesperrt werden kann.

Die Ventileinrichtung kann bei einer bevorzugten Ausführungsform vorteilhafterweise zumindest teilweise im Drehkörper angeordnet sein. Der Drehkörper ist zu diesem Zweck beispielsweise als Hülse ausgestaltet, durch die ein Abschnitt des Zufuhrkanals verläuft. Die Ventileinrichtung kann in den Drehkörper eingesetzt und an diesem zum Beispiel mittels eines Halteelementes fixiert sein.

Günstig ist es beispielsweise, wenn die Ventileinrichtung nicht über eine Endseite des Drehkörpers hinausragt, wodurch die Wahrscheinlichkeit einer Einwirkung von außen auf die Ventileinrichtung verringert werden kann und die Ventileinrichtung dadurch besser geschützt ist.

Vorgesehen sein kann, dass der Drehkörper die Ventileinrichtung umfasst.

Günstigerweise ist der Abschnitt des Zufuhrkanals ein Durchgangskanal des Drehkörpers, der beispielsweise geradlinig ausgestaltet sein kann. Der Durchgangskanal ist bei einer bevorzugten Ausführungsform strömungsaufwärts mit einem in der Halteeinrichtung gebildeten oder von dieser umfassten Abschnitt des Zufuhrkanals strömungsverbunden. Die Verbindung erfolgt insbesondere unter Zwischenschaltung einer Dichteinrichtung, wobei vorteilhafterweise eine Hochdruck-Dichtpackung vorgesehen sein kann. Auf diese Weise kann eine abgedichtete Drehdurchführung zwischen der Halteeinrichtung und dem Drehkörper ausgebildet werden.

Zur Vermeidung bewegter und insbesondere relativ zueinander rotierender Dichtflächen ist es bevorzugt, wenn die Ventileinrichtung drehfest mit dem Drehkörper gekoppelt ist.

Als vorteilhaft erweist es sich, wenn der Drehkörper koaxial zum Hochdruckwerkzeug in dessen Betriebsstellung ausgerichtet ist. Durch Ausrichtung der Drehachse und einer Werkzeugachse zueinander können bevorzugt Unwuchten bei der Rotation des Hochdruckwerkzeuges vermieden werden.

Insbesondere ist es günstig, wenn der im Drehkörper gebildete Abschnitt des Zufuhrkanals koaxial zum Werkzeugkanal in der Betriebsstellung des Hochdruckwerkzeuges ausgerichtet ist.

Zur Erzielung einer konstruktiv einfachen Ausgestaltung ist günstigerweise vorgesehen, dass die Ventileinrichtung selbstöffnend unter der Wirkung von unter Druck gesetzter Reinigungsflüssigkeit ausgestaltet ist und/oder selbstschließend ausgestaltet ist. Die Ventileinrichtung ist bei einer bevorzugten Ausführungsform dementsprechend druckbetätigbar mittels unter Druck gesetzter Reinigungsflüssigkeit. Im Betrieb gibt beispielsweise eine gesonderte Ventileinrichtung (zum Beispiel ein Magnetventil) die mittels eines Pumpaggregates unter Druck gesetzte Reinigungsflüssigkeit frei, die den Zufuhrkanal beaufschlagt und die Ventileinrichtung am Drehkörper in eine Freigabestellung überführt. Eine Rückstelleinrichtung kann vorgesehen sein, um die Ventileinrichtung bei abnehmendem Druck wieder in eine Dichtstellung zu überführen.

Von Vorteil ist es, wenn die Ventileinrichtung einen Steuerkörper umfasst, der relativ zum Drehkörper beweglich ist und in einer den Zufuhrkanal verschließenden Grundstellung an einem Anlageelement des Drehkörpers anliegt und in einer Ausrichtstellung vom Anlageelement angehoben ist, wobei der Steuerkörper einen Ventilkörper umfasst oder ausbildet oder ein solcher am Steuerkörper angeordnet ist, der in dessen Ausrichtstellung dichtend an einem Ventilsitz des Werkzeugkanals anliegt und in der Grundstellung von diesem Ventilsitz angehoben ist. In der Praxis erweist es sich als vorteilhaft, wenn auf diese Weise insbesondere eine Ausrichtung und insbesondere Zentrierung des zum Beispiel durch den Steuerkörper und den Ventilkörper verlaufenden Zufuhrkanals relativ zum Werkzeugkanal erzielt werden kann. Dies gilt insbesondere unter Berücksichtigung typischer Betriebsparameter der Umschaltvorrichtung von beispielsweise einem Betriebsdruck von ca. 150 bar und darüber, wobei der Betriebsdruck bis zu ungefähr 500 bar und darüber betragen kann, beispielsweise ungefähr 600 bar. Wird der Steuerkörper mit Reinigungsflüssigkeit beaufschlagt, kann eine Bewegung erfolgen, beispielsweise eine Verschiebung relativ zum Drehkörper. Der Ventilkörper gelangt zur Anlage an den Ventilsitz des Werkzeugkanals. Auf diese Weise ist sichergestellt, dass der Zufuhrkanal die korrekte Sollposition zum Werkzeugkanal einnimmt.

Durch obige Ausgestaltung wird bevorzugt eine Arretierung des Hochdruckwerkzeugs am Ventilsitz infolge der dichtenden Anlage des Ventilkörpers am Ventilsitz erzielt, so dass eine gesonderte Arretierung für das Hochdruckwerkzeug in der Betriebsstellung eingespart werden kann.

Günstig ist es dabei, wenn der Steuerkörper mit einem im Verhältnis zum Betriebsdruck geringen Druck der Reinigungsflüssigkeit in die Ausrichtstellung überführbar ist. Bei einer Umsetzung der Ventileinrichtung sind beispielsweise ungefähr 5 bar bis 10 bar ausreichend, um den Steuerkörper zu bewegen.

Berücksichtigt man, dass die Vorgänge der Umschaltvorrichtung bevorzugt schnell ablaufen, erweist sich vorstehend beschriebene Ausführungsform als besonders vorteilhaft. Beispielsweise kann ein Wechsel des Hochdruckwerkzeugs in weniger als ungefähr einer Sekunde durchgeführt werden, wobei 0,5 Sekunden oder weniger einen in der Praxis typischen Wert darstellen, zum Beispiel 0,4 Sekunden. Der Druckaufbau ausgehend vom Pumpaggregat kann bei weniger als ungefähr 0,5 Sekunden liegen, beispielsweise ungefähr 0,1 Sekunde. Es ist daher von Vorteil, wenn eine korrekte Relativposition des Zufuhrkanals und des Werkzeugkanals sichergestellt werden kann, bevor das Hochdruckwerkzeug mit dem vollen Betriebsdruck belastet wird.

Aus den voranstehenden Ausführungen geht insbesondere hervor, dass der Steuerkörper vorteilhafterweise mittels unter Druck gesetzter Reinigungsflüssigkeit in die Ausrichtstellung überführbar ist.

Vorgesehen sein kann, dass der Ventilkörper separat vom Steuerkörper gebildet ist und mit diesem verbunden ist.

Bei einer andersartigen Ausführungsform kann vorgesehen sein, dass der Ventilkörper einstückig mit dem Steuerkörper gebildet ist.

Als vorteilhaft erweist es sich, wenn der Ventilkörper einen Dichtkonus umfasst oder bildet, der in eine Konusaufnahme am Werkzeugkanal eingreift, oder umgekehrt. Dies erleichtert es, den Ventilkörper und den Ventilsitz relativ zueinander auszurichten.

Vorgesehen sein kann, wenn eine Verstelleinheit der Verstelleinrichtung beim Überführen in die Ausrichtstellung kurz deaktiviert oder passiv geschaltet wird. Dem Hochdruckwerkzeug wird auf diese Weise ausreichend Spiel verliehen, um die Ausrichtung relativ zum Steuerkörper sicherzustellen.

Vorgesehen sein kann, dass die Verstelleinheit während des Reinigungseinsatzes des Hochdruckwerkzeuges in der Betriebsstellung passiv geschaltet ist und lediglich für den Werkzeugwechsel aktiviert ist.

Der Steuerkörper ist vorteilhafterweise entgegen der Wirkung einer Rückstelleinrichtung von der Dichtstellung in die Ausrichtstellung überführbar. Bei Entfallen des Druckes der Reinigungsflüssigkeit, insbesondere zum Wechsel des Hochdruckwerkzeuges, kann der Steuerkörper auf diese Weise wieder die Dichtstellung einnehmen.

Die Rückstelleinrichtung ist vorteilhafterweise konstruktiv einfach mechanisch ausgestaltet und umfasst vorzugsweise ein elastisch verformbares Rückstellelement oder bildet ein solches. Das Rückstellelement ist zum Beispiel eine Schraubenfeder, die sich am Drehkörper abstützt und den Steuerkörper mit einer Rückstellkraft in Richtung der Grundstellung beaufschlagt. Die Rückstelleinrichtung ist insbesondere entsprechend demjenigen Druck ausgelegt, der für obige Bewegung des Steuerkörpers in die Ausrichtstellung erforderlich ist, d.h. beispielsweise dem vorstehend genannten Vordruck von ungefähr 5 bar bis 10 bar.

Der Steuerkörper kann beispielsweise als Hohlkörper ausgestaltet sein, der axial verschieblich im Drehkörper angeordnet ist. Im Steuerkörper kann insbesondere der nachfolgend genannte Ventilkörper angeordnet sein, der koaxial zum Steuerkörper und zum Drehkörper positioniert sein kann.

Der Steuerkörper kann insbesondere als Steuerkolben ausgestaltet sein.

Als vorteilhaft erweist es sich, wenn die Ventileinrichtung einen Ventilkörper umfasst oder ausbildet, der relativ zum Steuerkörper beweglich ist. Der Ventilkörper liegt vorteilhafterweise in einer den Zufuhrkanal verschließenden Dichtstellung an einem Ventilsitz des Steuerkörpers dichtend oder im Wesentlichen dichtend an und ist in einer Freigabestellung den Zufuhrkanal freigebend vom Ventilsitz angehoben. Der Ventilkörper gibt den Zufuhrkanal insbesondere erst dann frei, nachdem der Steuerkörper in die Ausrichtstellung überführt worden ist. Dementsprechend ist über den Ventilkörper und den Ventilsitz insbesondere ein Druckhalteventil gebildet, das bei dem vorstehend genannten Vordruck noch geschlossen sein kann.

Günstigerweise ist der Ventilkörper mittels unter Druck gesetzter Reinigungsflüssigkeit in die Freigabestellung überführbar, wobei hierfür ein höherer Druck der Reinigungsflüssigkeit erforderlich ist als zum Überführen des Steuerkörpers von der Grundstellung in die Ausrichtstellung. Der Ventilkörper wird insbesondere bei Erreichen des Betriebsdrucks von beispielsweise ungefähr 600 bar in die Freigabestellung überführt.

Das Öffnungsverhalten des Ventilkörpers relativ zum Verhalten des Steuerkörpers kann insbesondere über deren jeweilige, vom Druck der Reinigungsflüssigkeit beaufschlagbare Fläche und/oder eine jeweilige Rückstelleinrichtung eingestellt werden.

Vorteilhaft ist es, wenn bei steigendem Druck der Reinigungsflüssigkeit der Steuerkolben weiter mit einer Kraft beaufschlagt wird, wodurch eine zuverlässige Abdichtung im Bereich des Ventilkörpers und Ventilsitzes am Hochdruckwerkzeug erzielt werden kann. Zugleich wird die Ausrichtung dieses Ventilkörpers am Ventilsitz des Hochdruckwerkzeuges auch bei steigendem Betriebsdruck sichergestellt.

Günstig ist es nach dem vorstehend Gesagten, wenn der die Dichtstellung einnehmende Ventilkörper über am Ventilsitz des Steuerkörpers anliegt, wenn dieser relativ zum Drehkörper von der Grundstellung in die Ausrichtstellung bewegt wird.

Der Steuerkörper kann als Hohlkörper ausgestaltet sein, in dem der koaxial zu diesem ausgerichtete Ventilkörper angeordnet ist. Der Ventilkörper kann sich insbesondere an dem vorstehend genannten Ventilkörper des Steuerkörpers mittels eines Rückstellelementes abstützen.

Günstigerweise ist der Ventilkörper entgegen der Wirkung einer Rückstelleinrichtung von der Dichtstellung in die Freigabestellung überführbar. Die Rückstelleinrichtung ist bevorzugt konstruktiv einfach mechanisch ausgestaltet und umfasst oder bildet ein elastisch verformbares Rückstellelement. Das Rückstellelement kann zum Beispiel eine Schraubenfeder sein, die sich am Ventilkörper und mittel- oder unmittelbar am Steuerkörper abstützt.

Die Umschaltvorrichtung umfasst vorteilhafterweise mindestens eine Lagereinrichtung.

Der Grundkörper ist vorteilhafterweise über mindestens eine Lagereinrichtung direkt oder indirekt drehbar relativ zur Halteeinrichtung gelagert.

Alternativ oder ergänzend ist bevorzugt vorgesehen, dass das Hochdruckwerkzeug über mindestens eine Lagereinrichtung direkt oder indirekt drehbar relativ zur Verstelleinrichtung gelagert ist.

Günstig ist es, wenn mindestens eine Lagereinrichtung ein Radiallager bezüglich der Drehachse und/oder der Werkzeugachse umfasst oder bildet. Über das Radiallager können Radialkräfte bezüglich der Drehachse und/oder der Werkzeugachse aufgenommen werden.

Von Vorteil ist es, wenn mindestens eine Lagereinrichtung ein Axiallager bezüglich der Drehachse und/oder der Werkzeugachse umfasst oder bildet. Axialkräfte, insbesondere Kräfte zum Erzielen einer Abdichtung zwischen der Ventileinrichtung und dem Hochdruckwerkzeug, können auf diese Weise aufgenommen werden.

Als vorteilhaft erweist es sich, wenn eine erste Lagereinrichtung und eine zweite Lagereinrichtung vorgesehen sind, die als gegeneinander angestellte Axiallager ausgestaltet sind oder solche umfassen. Über die zusammenwirkenden Axiallager kann beispielsweise die Ausrichtung des Ventilkörpers am Steuerkolben relativ zum Ventilsitz des Hochdruckwerkzeugs und die erforderliche Abdichtung an dieser Position sichergestellt werden. Bei einer bevorzugten Ausführungsform sind die vorstehend genannten Lagereinrichtungen insbesondere Kegelrollenlager, mit denen zusätzlich zur axialen Lagerung auch eine radiale Lagerung erzielt werden kann.

Von Vorteil ist es, wenn die Umschaltvorrichtung mindestens eine Dichteinrichtung umfasst.

Beispielsweise ist eine Hochdruckdichtung vorgesehen, die zwischen dem Drehkörper der Halteeinrichtung abdichtet. Die Hochdruckdichtung kann beispielsweise eine Hochdruck-Dichtpackung umfassen oder als solche ausgestaltet sein. Die Dichtpackung ist beispielsweise zwischen dem Drehkörper und einer einen Abschnitt des Zufuhrkanals bildenden Zuströmhülse positioniert, die in den Drehkörper eingreift. Die Dichtpackung ist zum Beispiel ringförmig ausgebildet und mittels eines Halteelementes in einer Öffnung des Drehkörpers fixiert, wobei die Zuströmhülse radial innenseitig der Dichtpackung in den Drehkörper eingreift.

Alternativ oder ergänzend zur Dichtpackung kommt beispielsweise eine Labyrinthdichtung, eine Gleitringdichtung oder eine andersartige Hochdruckdichtung zum Einsatz.

Es ist vorteilhafterweise mindestens ein Dichtelement vorgesehen, das eine Lagereinrichtung zum Lagern des Drehkörpers relativ zur Halteeinrichtung abdichtet. Beispielsweise ist das Dichtelement als Wellendichtring ausgestaltet oder umfasst einen solchen, der direkt oder indirekt zwischen dem Drehkörper und der Halteeinrichtung dichtet.

In entsprechender Weise kann mindestens ein Dichtelement vorgesehen sein, das eine Lagereinrichtung zum Lagern des Hochdruckwerkzeugs relativ zur Verstelleinrichtung abdichtet, wobei das Dichtelement einen Wellendichtring umfassen kann oder als solcher ausgestaltet sein kann.

Der Drehkörper kann bei einer bevorzugten Ausführungsform einteilig ausgebildet sein. Alternativ ist eine mehrteilige Fertigung denkbar.

Die Antriebseinrichtung für den Drehkörper umfasst vorteilhafterweise ein drehfest mit dem Drehkörper gekoppeltes Antriebselement, das über eine Antriebseinheit mit einer Antriebskraft beaufschlagbar ist.

Günstigerweise ist das Antriebselement als den Drehkörper umgebendes Antriebsrad ausgestaltet, das direkt oder indirekt von der Antriebseinheit antreibbar ist. Beispielsweise kann vorgesehen sein, dass mindestens ein weiteres Antriebsrad vorhanden ist, über welches das Antriebsrad antreibbar ist.

Das mindestens eine Antriebsrad ist zum Beispiel ein Zahnrad, bei einer Mehrzahl von Zahnrädern können diese miteinander zur Übertragung der Antriebskraft auf den Drehkörper kämmen. Alternativ können aneinander abwälzende Reibräder vorgesehen sein. Denkbar ist auch der Einsatz eines Zugkraftübertragungselementes, zum Beispiel eines Zahnriemens oder einer Kette.

Vorteilhaft ist die Verwendung des Antriebsrades, insbesondere des Zahnrades, im Hinblick auf eine einfachere und schnellere Montage und/oder Demontage des Drehkörpers.

Das mindestens eine weitere Antriebsrad ist günstigerweise an der Halteeinrichtung drehbar gelagert, und die Antriebseinheit ist bevorzugt an der Halteeinrichtung fixiert.

Günstigerweise umfasst oder bildet die Antriebseinheit eine Antriebswelle, die parallel oder im Wesentlichen parallel zur Drehachse ausgerichtet ist. Auf diese Weise kann eine kompakte Bauform der Umschaltvorrichtung erzielt werden. Die Kraftübertragung von der Antriebswelle kann über zwei oder mehr Antriebsräder erfolgen, die vorteilhafterweise in einer gemeinsamen Ebene positioniert sind.

Als günstig erweist es sich, wenn die Halteeinrichtung einen Grundkörper umfasst, in dem eine Aufnahme für den Drehkörper und die Ventileinrichtung gebildet ist, wobei der Drehkörper direkt oder indirekt über mindestens eine Lagereinrichtung relativ zum Grundkörper drehbar gelagert ist.

Der Grundkörper kann insbesondere einen Abschnitt des Zufuhrkanals umfassen oder bilden.

Der Grundkörper kann einteilig oder mehrteilig ausgestaltet sein.

Von Vorteil ist es, wenn die Umschaltvorrichtung ein Aufnahmeteil umfasst, das den Drehkörper, die Ventileinrichtung und die mindestens eine Lagereinrichtung aufnimmt, die zusammen mit dem Aufnahmeteil eine vormontierte Baueinheit ausbilden, die der Aufnahme als Ganzes entnehmbar und/oder als Ganzes in diese einsetzbar ist. Dies erweist sich als besonders vorteilhaft im Hinblick auf eine Montage und die Wartung der Umschaltvorrichtung. Eine Baueinheit umfasst ein ein- oder mehrteiliges Aufnahmeteil, in dem der Drehkörper, die Ventileinrichtung und mindestens eine Lagereinrichtung zum Lagern des Drehkörpers gegenüber dem Aufnahmeteil angeordnet sind. Die Aufnahmeeinheit kann auch ein Antriebsrad der Antriebseinrichtung umfassen, das drehfest mit dem Drehkörper gekoppelt ist. Diese Baueinheit kann vormontiert in die Aufnahme eingesetzt werden. Zur Wartung kann die Baueinheit vorzugsweise als Ganzes der Aufnahme entnommen werden. Die Baueinheit bildet insbesondere eine Drehdurchführung der Umschaltvorrichtung.

Insbesondere umfasst oder bildet die Umschaltvorrichtung einen sogenannten "Revolver" für die Hochdruckwerkzeuge infolge des drehbaren Verstellelementes.

Die Verstelleinrichtung umfasst oder bildet vorteilhafterweise ein Verstellelement, das mittels einer Verstelleinheit relativ zur Halteeinrichtung um eine Drehachse drehbar ist, zum Überführen eines jeweiligen Hochdruckwerkzeuges in die Betriebsstellung. Die Drehachse ist vorteilhafterweise quer und insbesondere senkrecht zur Drehachse des Drehkörpers ausgerichtet. Das Verstellelement kann ringförmig ausgestaltet sein oder einen ringförmigen Abschnitt aufweisen, an dem die zwei oder mehr Hochdruckwerkzeuge gehalten sind. Am Verstellelement kann ein Antriebselement angeordnet oder gebildet sein, das mit einem korrespondierenden Antriebselement der Verstelleinheit zusammenwirkt. Beispielsweise ist ein ringförmiges Antriebselement vorgesehen, das über eine Kegelradverzahnung mit einem Kegelrad der Verstelleinheit kämmt.

Von Vorteil ist es, wenn die Verstelleinrichtung ein Verstellelement umfasst oder bildet und ein jeweiliges, einem Hochdruckwerkzeug zugeordnetes und am Verstellelement festgelegtes Werkzeughalteteil, und wenn das jeweilige Werkzeug über mindestens eine Lagereinrichtung relativ zum Werkzeughalteteil drehbar gelagert ist. Das Werkzeughalteteil ist beispielsweise fest am Verstellelement fixiert und die mindestens eine Lagereinrichtung erlaubt die drehbare Lagerung des Hochdruckwerkzeuges.

Die erfindungsgemäße Umschaltvorrichtung weist zwei oder mehr Hochdruckwerkzeuge auf. Bei einer bevorzugten Ausführungsform kann vorgesehen sein, dass die zwei oder mehr Hochdruckwerkzeuge zu einer ersten Gruppe von Hochdruckwerkzeugen gehören, die wahlweise in die Betriebsstellung überführt werden können. Eine derartige Ausführungsform kann vorteilhafterweise eine zweite Gruppe von zwei oder mehr Hochdruckwerkzeugen umfassen, die wahlweise in eine Betriebsstellung überführt werden können.

Günstig ist es, wenn die zwei oder mehr Hochdruckwerkzeuge eine erste Gruppe von Hochdruckwerkzeugen der Umschaltvorrichtung bilden und wenn die Umschaltvorrichtung eine weitere Gruppe von zwei oder mehr Hochdruckwerkzeugen umfasst, denen ein weiterer mittels der Antriebseinrichtung relativ zur Halteeinrichtung um eine weitere Drehachse drehbarer Drehkörper zugeordnet ist, wobei mittels der Verstelleinrichtung wahlweise eines der Hochdruckwerkzeuge der weiteren Gruppe von Hochdruckwerkzeugen von einer Außerbetriebsstellung in eine Betriebsstellung überführbar ist, in welcher Betriebsstellung das Hochdruckwerkzeug drehfest mit dem weiteren Drehkörper gekoppelt und über diesen um eine weitere Werkzeugachse drehend antreibbar ist, wobei die Umschaltvorrichtung einen weiteren Zufuhrkanal für unter Druck gesetzte Reinigungsflüssigkeit umfasst oder ausbildet und das jeweilige Hochdruckwerkzeug der weiteren Gruppe von Hochdruckwerkzeugen einen Werkzeugkanal für Reinigungsflüssigkeit umfasst oder ausbildet, der im Betrieb in Strömungsverbindung mit dem weiteren Zufuhrkanal steht oder bringbar ist, wobei die Umschaltvorrichtung ferner eine weitere Ventileinrichtung umfasst, mit der der weitere Zufuhrkanal wahlweise freigebbar und schließbar ist, wobei der weitere Zufuhrkanal zumindest abschnittsweise im weiteren Drehkörper gebildet ist und die weitere Ventileinrichtung am weiteren Drehkörper angeordnet ist.

Bei einer derartigen Umschaltvorrichtung können diejenigen Vorteile, die mit der erfindungsgemäßen Umschaltvorrichtung erzielt und voranstehend erläutert wurden, auch für die zweite Gruppe von Hochdruckwerkzeugen erzielt werden. Durch die Anordnung der Ventileinrichtung am Drehkörper und des Zufuhrkanals im Drehkörper kann am Drehkörper selbst die Zufuhr von Reinigungsflüssigkeit freigegeben oder gesperrt werden. Dies ermöglicht eine kompakte Bauform, weil gesonderte Ventileinrichtungen für die jeweiligen Hochdruckwerkzeuge vorzugsweise eingespart werden können.

Durch die zusätzlichen Hochdruckwerkzeuge der zweiten Gruppe kann die Taktzeit bei der Reinigung und/oder Bearbeitung von Werkstücken verringert, indem die Anzahl pro Zeiteinheit bearbeiteter und/oder gereinigter Werkstücke gesteigert wird. Beispielsweise besteht die Möglichkeit, zwei Werkstücke gleichzeitig zu bearbeiten und/oder zu reinigen, mit jeweils einem der die Betriebsstellung einnehmenden Hochdruckwerkzeuge. Die Werkstücke können zum Beispiel auf einer gemeinsamen Aufnahmeeinrichtung montiert sein und von jeweils einem der Hochdruckwerkzeuge beaufschlagt werden.

Merkmale bevorzugter Ausführungsformen der erfindungsgemäßen Umschaltvorrichtung, erläutert am Beispiel der ersten Gruppe von Hochdruckwerkzeugen, können teilweise oder vollständig auch bei der zweiten Gruppe von Hochdruckwerkzeugen vorhanden und umgesetzt sein. Auf die diesbezüglichen voranstehenden Ausführungen wird verwiesen.

Vorgesehen sein kann, dass die Drehkörper mit parallel zueinander ausgerichteten Drehachsen angeordnet sind.

Alternativ oder ergänzend ist vorzugsweise vorgesehen, dass jeweils ein Hochdruckwerkzeug der ersten Gruppe und ein Hochdruckwerkzeug der zweiten Gruppe mit parallel zueinander ausgerichteten Werkzeugachsen angeordnet sind.

Günstig ist es, wenn die Hochdruckwerkzeuge der ersten Gruppe und die Hochdruckwerkzeuge der zweiten Gruppe axial bezogen auf eine Drehachse der Verstelleinrichtung, insbesondere des Verstellelementes wie vorstehend beschrieben, nebeneinander angeordnet sind. Nebeneinander angeordnete Hochdruckwerkzeuge nehmen vorzugsweise gemeinsam die jeweilige Betriebsstellung ein. Dies erlaubt es, nebeneinander platzierte Werkstücke zu bearbeiten und/oder zu reinigen.

Der Abstand nebeneinander angeordneter Hochdruckwerkzeuge kann beispielsweise ungefähr 90 mm bis 120 mm betragen.

Günstigerweise sind die Hochdruckwerkzeuge der ersten Gruppe und die Hochdruckwerkzeuge der zweiten Gruppe in Umfangsrichtung einer Drehachse der Verstelleinrichtung, insbesondere des Verstellelementes wie vorstehend beschrieben, an denselben Positionen angeordnet. Beim Drehen der Verstelleinrichtung relativ zur Halteeinrichtung besteht insbesondere die Möglichkeit, dass ein jeweiliges Hochdruckwerkzeug der ersten und der zweiten Gruppe die Betriebsstellung bzw. die Außerbetriebsstellung einnimmt.

Günstigerweise ist vorgesehen, dass Hochdruckwerkzeuge der ersten Gruppe und der zweiten Gruppe, die jeweils die Betriebsstellung einnehmen, identisch ausgestaltet sind. Dabei sind die Hochdruckwerkzeuge vorzugsweise axial nebeneinander und in Umfangsrichtung der Drehachse der Verstelleinrichtung an denselben Positionen angeordnet.

Der Zufuhrkanal und der weitere Zufuhrkanal münden vorzugsweise aufstromseitig der Drehkörper in einander und sind gemeinsam mit der Reinigungsflüssigkeit beaufschlagbar. Beispielsweise verläuft ein Abschnitt eines Zufuhrkanals im Grundkörper und verzweigt in zwei Zufuhrkanäle oder Zufuhrkanalabschnitte, die einem jeweiligen Drehkörper zugeordnet sind und beispielsweise Durchgangskanäle des Drehkörpers sind.

Der Drehkörper und der weitere Drehkörper sind vorteilhafterweise direkt oder indirekt über mindestens ein Antriebselement der Antriebseinrichtung gekoppelt. Dies gibt die Möglichkeit einer gemeinsamen, vorzugsweise synchronen Bewegung der Hochdruckwerkzeuge der beiden Gruppen.

Die Drehkörper können bei einer bevorzugten Ausführungsform jeweils drehfest mit einem Antriebsrad gekoppelt sein, wobei ein weiteres mit den Antriebsrädern in Eingriff stehendes Antriebsrad vorgesehen ist. Die Antriebsräder sind zum Beispiel Zahnräder, wobei beispielsweise ein zwischen den beiden Drehkörpern angeordnetes Antriebs- und insbesondere Zahnrad zur Kopplung vorgesehen ist. Alternativ können aneinander wälzende Reibräder vorgesehen sein. Die Übertragung der Antriebskraft über ein zwischen den Drehkörpern geschaltetes Antriebsrad erlaubt es, beide Drehkörper in demselben Drehsinn zu drehen.

Wie vorstehend beschrieben ist für den Drehkörper und die Ventileinrichtung vorzugsweise eine Aufnahme im Grundkörper vorgesehen, wobei günstigerweise eine Baueinheit vormontiert in die Aufnahme eingesetzt werden kann. Als vorteilhaft erweist es sich insbesondere, wenn die Komponenten, die der zweiten Gruppe von Hochdruckwerkzeugen zugeordnet sind, in entsprechender Weise ausgestaltet sind.

Dementsprechend ist es von Vorteil, wenn im Grundkörper eine weitere Aufnahme für den weiteren Drehkörper und die weitere Ventileinrichtung gebildet ist, wobei der weitere Drehkörper direkt oder indirekt über mindestens eine Lagereinrichtung relativ zum Grundkörper drehbar gelagert ist. Vorteilhafterweise umfasst die Umschaltvorrichtung ein weiteres Aufnahmeteil, das den weiteren Drehkörper, die weitere Ventileinrichtung und die mindestens eine Lagereinrichtung aufnimmt, die zusammen mit dem weiteren Aufnahmeteil eine weitere vormontierte Baueinheit ausbilden, die der weiteren Aufnahme als Ganzes entnehmbar und/oder als Ganzes in diese einsetzbar ist. Dies erweist sich als besonders vorteilhaft im Hinblick auf eine Montage und die Wartung der Umschaltvorrichtung. Die Baueinheit kann ein Antriebsrad der Antriebseinrichtung umfassen, das drehfest mit dem Drehkörper gekoppelt ist. Sind zwei derartige Baueinheiten vorgesehen, ist vorzugsweise zwischen den Baueinheiten im Grundkörper ein die Antriebsräder koppelndes Antriebsrad drehbar gelagert.

Die Baueinheit und die weitere Baueinheit sind vorzugsweise identisch ausgestaltet.

Die erfindungsgemäße Umschaltvorrichtung eignet sich insbesondere zum Reinigen und/oder Bearbeiten von Werkstücken im Bereich der Mechatronik, der Elektronik und/oder aus Kunststoff, im Bereich der Holz- oder Möbelindustrie oder zum Reinigen generativ gefertigter Werkstücke. Die Anwendung der Umschaltvorrichtung ist jedoch nicht hierauf beschränkt. Insgesamt können beispielsweise Werkstücke aus Metall, Keramik oder Kunststoff gereinigt und/oder bearbeitet werden. Die Werkstücke können zum Beispiel Motorenteile oder Getriebeteile sein, etwa Zylinderköpfe, Zylinderkurbelgehäuse, Gehäuse, Räder oder Wellen. Die Werkstücke können zum Beispiel Bauteile für Elektromotoren sein, wie etwa Spulenkörper, Gehäuse, Lager oder Wellen. Die Werkstücke können aus dem Bereich der Medizintechnik stammen und beispielsweise Implantate sein. Denkbar ist der Einsatz des Hochdruckwerkzeugs für Werkstücke aus unterschiedlichen Werkstoffen (hybride Werkstücke). Abgesehen von trockenen partikulären Verunreinigungen können Bearbeitungsrückstände grö-βerer Art abgereinigt werden, beispielsweise Späne, Strahlmittel, Gießkernrückstände oder Flittergrade. Filmartige Verschmutzungen wie zum Beispiel durch Kühlschmierstoff, Öle, Fette, Trennmittel oder Schleifmittel oder Produktionsrückstände, zum Beispiel aus der Kunststoffverarbeitung, können vorzugsweise ebenfalls entfernt werden.

Die vorliegende Erfindung bezieht sich auch auf eine Reinigungsvorrichtung, die mindestens eine Umschaltvorrichtung der vorstehend genannten Art aufweist.

Die Reinigungsvorrichtung kann insbesondere ein Pumpaggregat umfassen, das mit dem Zufuhrkanal der Umschaltvorrichtung in Strömungsverbindung steht oder bringbar ist, für die Bereitstellung einer Reinigungsflüssigkeit.

Die Reinigungsvorrichtung kann mindestens eine Verstelleinrichtung zum Bewegen der Umschaltvorrichtung aufweisen. Insbesondere kann eine translatorische und/oder rotatorische Bewegung der Umschaltvorrichtung möglich sein, zum Beispiel in sechs Freiheitsgraden. Denkbar ist eine Verstellung mittels eines Roboterarms oder über CNC-Achsen. Alternativ kann eine starre Befestigung der Umschaltvorrichtung vorgesehen sein.

Die nachfolgende Beschreibung einer bevorzugten Ausführungsform der Erfindung dient im Zusammenhang mit der Zeichnung der näheren Erläuterung der Erfindung. Es zeigen:
- Figur 1:: eine schematische Darstellung einer Reinigungsvorrichtung zum Reinigen von Werkstücken mittels einer unter Druck stehenden Reinigungsflüssigkeit, wobei die Reinigungsvorrichtung einen Roboterarm zum Bewegen einer erfindungsgemäßen Umschaltvorrichtung umfasst;
- Figur 2:: eine perspektivische Darstellung der Umschaltvorrichtung aus Figur 1;
- Figur 3:: eine Seitenansicht der Umschaltvorrichtung;
- Figur 4:: eine Schnittansicht der Umschaltvorrichtung längs der Linie 4-4 in Figur 3;
- Figur 5:: eine vergrößerte Darstellung von Detail A in Figur 4, ohne Druckbeaufschlagung;
- Figur 6:: eine Darstellung entsprechend Figur 5, wobei die Reinigungsflüssigkeit unter Vordruck steht;
- Figur 7:: eine Darstellung entsprechend Figur 6, nachdem der Druck auf den Betriebsdruck angestiegen ist;
- Figur 8:: eine Ansicht entsprechend Figur 4, teilweise in einer Explosionsdarstellung;
- Figur 9:: eine perspektivische Darstellung entsprechend Figur 2 bei einer weiteren bevorzugten Ausführungsform der erfindungsgemäßen Umschaltvorrichtung;
- Figur 10:: eine Schnittansicht der Umschaltvorrichtung aus Figur 9; und
- Figur 11:: eine vergrößerte Darstellung von Detail B in Figur 10, wie in Figur 5 ohne Druckbeaufschlagung.

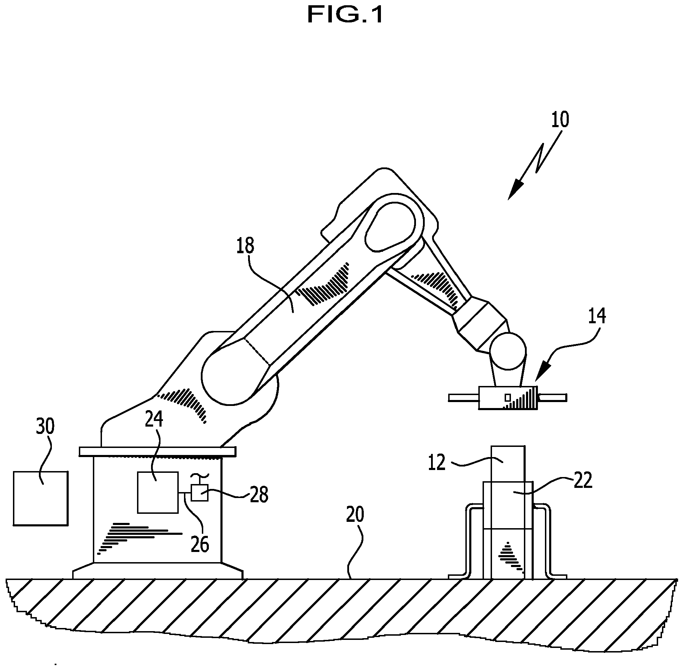

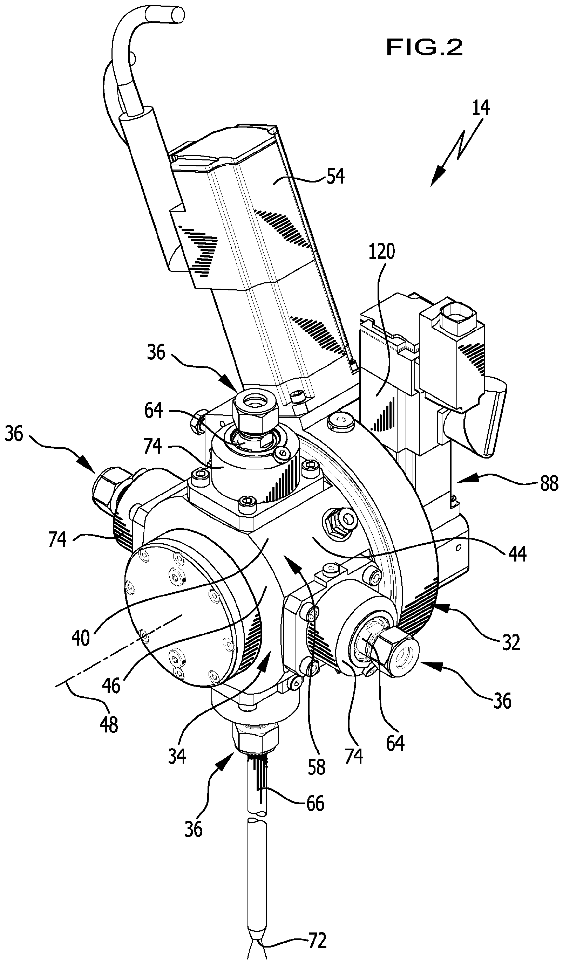

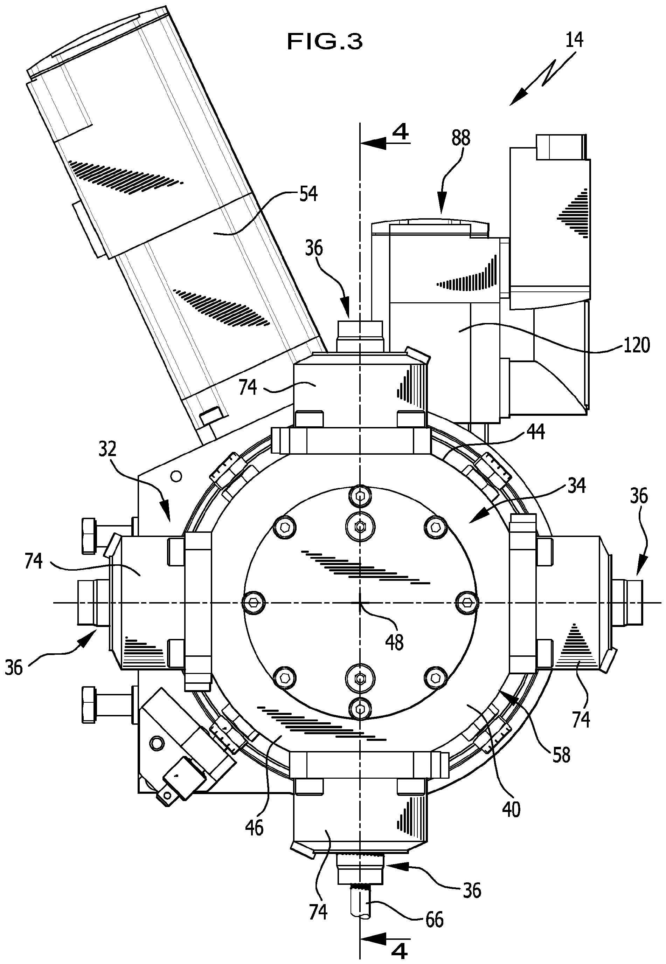

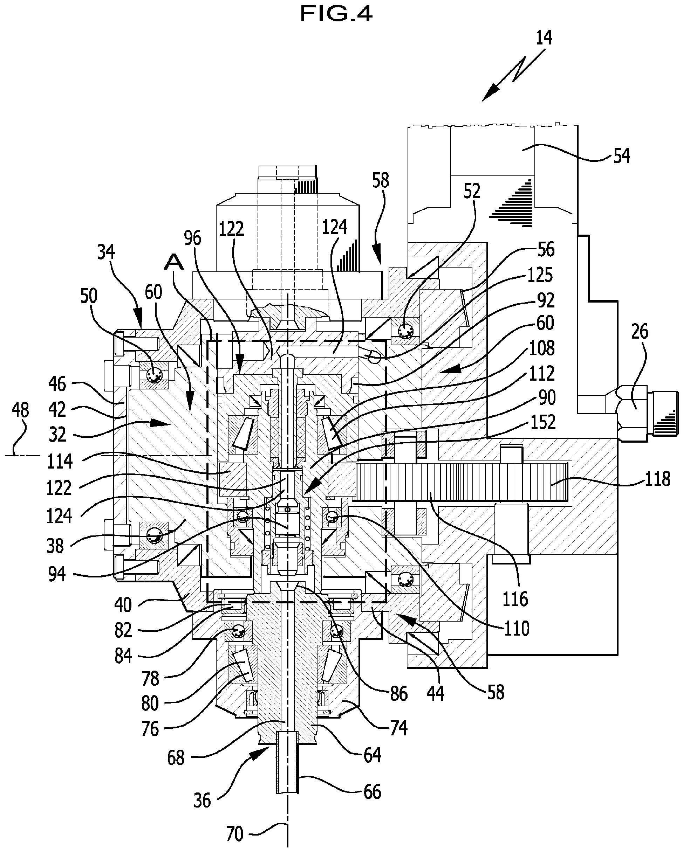

Figur 1 zeigt eine insgesamt mit dem Bezugszeichen 10 belegte vorteilhafte Ausführungsform einer erfindungsgemäßen Reinigungsvorrichtung zum Reinigen eines Werkstücks 12. Die Reinigungsvorrichtung 10 umfasst eine bevorzugte Ausführungsform der erfindungsgemäßen Umschaltvorrichtung, die insgesamt mit dem Bezugszeichen 14 belegt ist und nachfolgend insbesondere unter Verweis auf die Figuren 2 bis 8 erläutert wird.

Die Reinigungsvorrichtung 10 umfasst zum Bewegen der Umschaltvorrichtung 14 eine Verstelleinrichtung 16, die vorliegend einen Roboterarm 18 auf einer Aufstellfläche 20 umfasst. Über die Verstelleinrichtung 16 kann die Umschaltvorrichtung 14 relativ zum Werkstück 12 vorzugsweise translatorisch und rotatorisch bewegt werden, zum Beispiel in sechs Freiheitsgraden.

Das Werkstück 12 ist im vorliegenden Beispiel stationär an einer Aufnahmeeinrichtung 22 gehalten. Denkbar ist jedoch, dass auch das Werkstück 12 mittels einer nicht dargestellten Verstelleinrichtung beweglich ist. Auch die Umschaltvorrichtung 14 kann stationär angeordnet sein.

Die Reinigungsvorrichtung 10 umfasst ein schematisch dargestelltes Pumpaggregat 24 zum Bereitstellen einer unter Druck gesetzten Reinigungsflüssigkeit. Die Reinigungsflüssigkeit kann der Umschaltvorrichtung 14 über eine Fluidleitung 26 zugeführt werden. Mittels einer Ventileinrichtung 28 kann die Fluidleitung 26 wahlweise freigegeben und gesperrt werden.

Die Reinigungsvorrichtung 10 umfasst eine Steuereinrichtung 30 zum Steuern und/oder Regeln des Betriebs, insbesondere zur Steuerung des Pumpaggregates 24, der Ventileinrichtung 28, der Komponenten der Umschaltvorrichtung 14 und der Verstelleinrichtung 16.

Die Umschaltvorrichtung 14 umfasst eine Halteeinrichtung 32, über die die Umschaltvorrichtung 14 vorliegend am Roboterarm 18 festgelegt ist, sowie eine Verstelleinrichtung 34 mit einer Mehrzahl von daran gehaltenen Hochdruckwerkzeugen 36.

Die Umschaltvorrichtung 14 bildet einen sogenannten "Revolver" für die Hochdruckwerkzeuge 36.

Die Halteeinrichtung 32 umfasst oder bildet über einen Grundkörper 38 einen Sockel oder eine Basis für ein Verstellelement 40 der Verstelleinrichtung 34. Das Verstellelement 40 überfängt den Grundkörper 38 von einer Seite 42 desselben. Das Verstellelement 40 ist dementsprechend vorliegend näherungsweise kappenartig oder deckelartig ausgestaltet mit einer umlaufenden Wand 44 und einer an der Seite 42 angeordneten Deckenwand 46. Das Verstellelement 40 definiert eine Drehachse 48 und ist um diese relativ zur Halteeinrichtung 32 drehbar. Lagereinrichtungen 50, 52 dienen zur Lagerung des Verstellelementes 40 an der Halteeinrichtung 32.

Zum Drehen des Verstellelementes 40 umfasst die Verstelleinrichtung 34 eine Verstelleinheit 54, die beispielsweise einen Schritt- oder Servomotor umfasst. Im vorliegenden Fall weist das Verstellelement 40 an einer der Seite 42 gegenüberliegenden Seite eine Verzahnung 56 auf, die mit einer in der Zeichnung nicht dargestellten Verzahnung an der Verstelleinheit 54 in Eingriff steht. Hierbei handelt es sich um eine Kegelradverzahnung.

Das Verstellelement 40 kann vorliegend insbesondere als Rotor 58 angesehen werden, der relativ zu einem Stator 60 drehbar ist, wobei der Stator 60 vorliegend von der Halteeinrichtung 32 und insbesondere dem Grundkörper 38 gebildet wird.

Am Rotor 58 sind mehrere Hochdruckwerkzeuge 36 gehalten, die sich hinsichtlich ihrer Reinigungseigenschaften voneinander unterscheiden, beispielsweise durch die Form, Ausrichtung und Anzahl einer oder mehrere Düse(n), über die die Reinigungsflüssigkeit versprüht wird.

Vorliegend sind vier Hochdruckwerkzeuge 36 vorgesehen, die in Umfangsrichtung der Drehachse 48 gleichmäßige Winkelabstände zueinander aufweisen, d.h. jeweils 90°. Denkbar ist, dass eine unterschiedliche Anzahl von Hochdruckwerkzeugen 36 vorgesehen ist, beispielsweise fünf oder sechs Hochdruckwerkzeuge 36. Auch ein Tausch des Rotors 58 ist denkbar.

Ein jeweiliges Hochdruckwerkzeug 36 umfasst einen Basisabschnitt 64 und einen lanzenförmigen Abgabeabschnitt 66, der am Basisabschnitt 64 festgelegt ist. In der Zeichnung ist nur ein Abgabeabschnitt 66 exemplarisch dargestellt. Der Basisabschnitt 64 und der Abgabeabschnitt 66 definieren gemeinsam einen Werkzeugkanal 68 für abzugebende Reinigungsflüssigkeit, der eine Werkzeugachse 70 definiert. Endseitig am Abgabeabschnitt 66 ist mindestens eine Öffnung angeordnet, insbesondere in Gestalt einer Düse 72.

Vorteilhafterweise kann das Hochdruckwerkzeug 36 zumindest mit dem Abgabeabschnitt 66 in Hohlräume des Werkstücks 12 eingreifen, um dies innenseitig zu reinigen.

Einem jeweiligen Hochdruckwerkzeug 36 ist ein Werkzeughalteteil 74 zugeordnet. Über das Werkzeughalteteil 74 ist das Hochdruckwerkzeug 36 am Rotor 58 festgelegt. Dabei überfängt das Werkzeughalteteil 74 das Hochdruckwerkzeug 36 und liegt flanschartig am Rotor 58 an.

Über mindestens eine Lagereinrichtung ist das Hochdruckwerkzeug 36 relativ zum Werkzeughalteteil 74 um die Werkzeugachse 70 drehbar gelagert. Vorliegend sind zwei Lagereinrichtungen 76, 78 vorgesehen. Die Lagereinrichtung 76 ist insbesondere als Kegelrollenlager 80 ausgestaltet. Dadurch kann nicht nur eine radiale Lagerung des Hochdruckwerkzeugs 36 erzielt werden, sondern auch eine axiale Lagerung. Die Lagereinrichtung 78 ist vorliegend ein Kugellager.

Die Lagereinrichtungen 76, 78 sind mittels eines Dichtelementes 82 abgedichtet, das beispielsweise als Wellendichtring 84 ausgestaltet ist.

Eingangsseitig am Werkzeugkanal 68 ist ein Ventilsitz 86 gebildet, der wie nachfolgend erläutert mit einem Ventilkörper zusammenwirken kann. Der Ventilsitz 86 ist vorliegend eine Konusaufnahme für einen Ventilkonus.

Über die Verstelleinrichtung 34 kann ein gewünschtes Hochdruckwerkzeug 36 von einer Außerbetriebsstellung in eine Betriebsstellung überführt werden. In der Betriebsstellung wird die vom Pumpaggregat 24 bereitgestellte Reinigungsflüssigkeit von dem entsprechenden Hochdruckwerkzeug 36 abgegeben, wohingegen die Hochdruckwerkzeuge 36 in ihrer Außerbetriebsstellung nicht mit Reinigungsflüssigkeit beaufschlagt werden.

In der Zeichnung nimmt das unten am Rotor 58 angeordnete Hochdruckwerkzeug 36 die Betriebsstellung ein. "Unten" dient vorliegend lediglich der Erläuterung der Zeichnung und dem besseren Verständnis der Erfindung. Es versteht sich, dass abhängig von der Orientierung der Umschaltvorrichtung 14 im Raum das die Betriebsstellung einnehmende Hochdruckwerkzeug 36 eine andersartige Positionierung oder Ausrichtung relativ zur Schwerkraftlinie aufweisen kann.

Der Werkzeugwechsel über den Rotor 58 kann bei der Umschaltvorrichtung 14 sehr rasch erfolgen, beispielsweise in ungefähr 0,4 s. Die Verstelleinheit 54 kann über die Steuereinrichtung 30 vorteilhafterweise passiv geschaltet werden, so dass der Rotor 58 frei drehbar zur Halteeinrichtung 32 ist. Beim Werkzeugwechsel erweist sich dies als vorteilhaft, wie bereits vorstehend erläutert wurde.

Um das die Betriebsstellung einnehmende Hochdruckwerkzeug 36 um die Werkzeugachse 70 zu rotieren, umfasst die Umschaltvorrichtung 14 eine Antriebseinrichtung 88 und einen von dieser drehend antreibbaren Drehkörper 90.

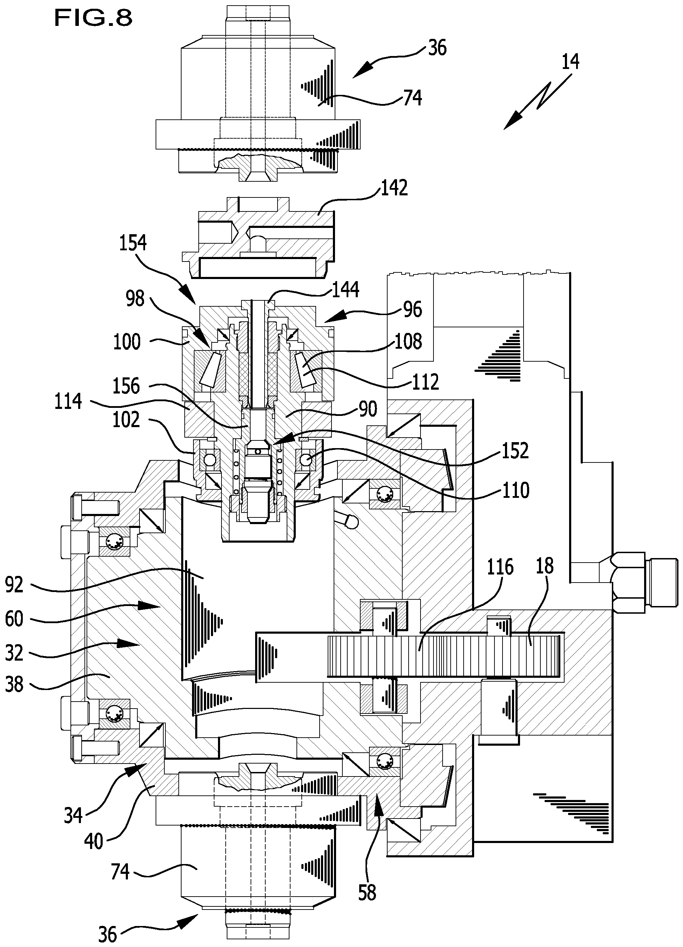

Der Drehkörper 90 ist in einer Aufnahme 92 des Grundkörpers 38 aufgenommen und relativ zu diesem mittels mindestens einer Lagereinrichtung um eine vom Drehkörper definierte Drehachse 94 drehbar gelagert. Vorliegend ist der Drehkörper 90 mittelbar am Grundkörper 38 gelagert. Wie insbesondere in Figur 8 zu erkennen ist, ist der Drehkörper 90 Bestandteil einer Baueinheit 96, die ein den Drehkörper 90 aufnehmendes Aufnahmeteil 98 umfasst und in die Aufnahme 92 eingesetzt ist.

Das Aufnahmeteil 98 ist gehäuseartig ausgestaltet und umfasst zum Beispiel einen ersten Abschnitt 100 sowie einen zweiten Abschnitt 102. Die Abschnitte 100, 102 sind im Abstand zueinander angeordnet und von der Grundform jeweils ungefähr kappenförmig oder deckelförmig ausgebildet. Zwischen den Abschnitten 100, 102 ist ein Aufnahmeraum 104 gebildet, in dem der Drehkörper 90 überwiegend aufgenommen ist. Der Drehkörper 90 durchgreift eine Öffnung am Abschnitt 102 und ragt in Richtung des die Betriebsstellung einnehmenden Hochdruckwerkzeugs 36.

Der Drehkörper 90 ist über eine Lagereinrichtung 108 relativ zum Abschnitt 100 drehbar gelagert und über eine Lagereinrichtung 110 relativ zum Abschnitt 102 und infolgedessen mittels zweier Lagereinrichtungen 108, 110 relativ zum Aufnahmeteil 98. Da das Aufnahmeteil 98 verdrehgesichert in die Aufnahme 92 eingesetzt ist, besteht eine mittelbare drehbare Lagerung des Drehkörpers 90 am Grundkörper 38.

Im vorliegenden Fall erfolgt zusätzlich zur radialen Lagerung auch eine axiale Lagerung des Drehkörpers 90. Zu diesem Zweck ist vorliegend die Lagereinrichtung 108 als Kegelrollenlager 112 ausgestaltet.

Die Antriebseinrichtung 88 umfasst ein den Drehkörper 90 umgebendes und mit diesem drehfest gekoppeltes Antriebselement 114, ausgestaltet als Antriebsrad und insbesondere als Zahnrad. Weiter umfasst die Antriebseinrichtung 88 ein Antriebselement 116, das an der Halteeinrichtung 82 drehbar gelagert ist sowie ein weiteres Antriebselement 118, das drehfest mit einer Antriebswelle einer Antriebseinheit 120 der Antriebseinrichtung 88 gekoppelt ist. Die Antriebseinheit 120 umfasst beispielsweise einen Schritt- oder Servomotor.

Die Antriebselemente 114, 116 und 118 sind Antriebsräder, insbesondere Zahnräder, wobei die Antriebseinheit das Antriebselement 118 antreibt, das mit dem Antriebselement 116 kämmt, welches wiederum mit dem Antriebselement 114 kämmt.

Die Antriebswelle der Antriebseinheit 120 ist vorliegend parallel zur Drehachse 94 ausgerichtet, so dass die Umschaltvorrichtung 14 entlang der Drehachse 48 kompakt aufgebaut ist. Hierfür ist es auch von Vorteil, dass die Antriebseinheit 120 und die Verstelleinheit 54 in einer gemeinsamen Ebene angeordnet sind (Figur 2).

Das Antriebselement 114 ist vorliegend Bestandteil der Baueinheit 96 und zwischen den Abschnitten 100, 102 angeordnet.

Der Drehkörper 90 ist hülsenförmig ausgestaltet und bildet einen Abschnitt 122 eines Zufuhrkanals 124 für Reinigungsflüssigkeit. Im Drehkörper 90 ist der Zufuhrkanal 124 ein axialer Durchgangskanal. Ein weiterer Abschnitt 125 des Zufuhrkanals 124 ist in der Halteeinrichtung 32 gebildet und verläuft insbesondere durch den Grundkörper 38.

Der Drehkörper 90 weist in Strömungsrichtung der Reinigungsflüssigkeit eine Verbreiterung 126 auf, an der ein vorliegend ringförmiges Anlageelement 128 gebildet ist. Das Anlageelement 128 ist ein Anschlag.

An einer Seite 130, die dem die Betriebsstellung einnehmenden Hochdruckwerkzeug 36 zugewandt ist, umfasst der Drehkörper 90 ein Eingriffselement 132. In der Betriebsstellung des Hochdruckwerkzeuges 36 steht dessen Basisabschnitt 64 in Eingriff mit dem Eingriffselement 132, insbesondere über Formschluss. Auf diese Weise besteht die Möglichkeit, eine Rotation des Drehkörpers 90 an das Hochdruckwerkzeug 36 zu übertragen, so dass dieses um die Werkzeugachse 70 rotieren kann.

Im Betrieb der Umschaltvorrichtung 14 können Drehzahlen des Hochdruckwerkzeuges 36 von bis zu ungefähr 3.000 Umdrehungen pro Minute vorgesehen sein. Die Drehzahl kann von der Steuereinrichtung 30 eingestellt werden. Vorgesehen sein kann jedoch, dass je nach Einsatzzweck das Hochdruckwerkzeug 36 nicht rotiert.

Die Lagereinrichtungen 108, 110 sind mittels einer Dichteinrichtung abgedichtet. Insbesondere ist ein Dichtelement 134 vorgesehen, das zwischen dem Drehkörper 90 und dem Aufnahmeteil 98 an dessen ersten Abschnitt 100 nahe der Lagereinrichtung 108 abdichtet. Das Dichtelement 134 ist ein Wellendichtring 136.

Ein weiteres Dichtelement 138, ebenfalls ausgestaltet als Wellendichtring 140, dichtet zwischen dem Drehkörper 90 und dem Aufnahmeteil 98 an dessen zweiten Abschnitt 102, nahe der Lagereinrichtung 110.

Die in die Aufnahme 92 eingesetzte Baueinheit 96 wird von einem den Zufuhrkanal 124 abschnittsweise bildenden Abdeckteil 142 abgedeckt, das die Aufnahme 92 verschließt. Am Abdeckteil 142 ist eine in den Drehkörper 90 eingreifende Zuströmhülse 144 verdrehgesichert festgelegt. Eine Dichteinrichtung ist vorgesehen, vorliegend in Gestalt einer Hochdruck-Dichtpackung 146, mittels derer die Zuströmhülse 144 relativ zum Drehkörper 90 abgedichtet ist. Die Dichtpackung 146 liegt an einem Anschlagelement 148 am Drehkörper 90 an und ist relativ zu diesem mittels eines Halteelementes 150 unbeweglich fixiert. Die Zuströmhülse 144 greift vorliegend ungefähr bis zum Anschlagelement 148 in den Drehkörper 90 ein.

Die Umschaltvorrichtung 14 umfasst zum Freigeben und Sperren des Zufuhrkanals 124 eine Ventileinrichtung 152. Die Ventileinrichtung 152 ist am Drehkörper 90 angeordnet und insbesondere Bestandteil der Baueinheit 96.

Die Ventileinrichtung 152 ist im Drehkörper 90 aufgenommen und drehfest mit diesem gekoppelt. Auf diese Weise können relativ zueinander rotierende Dichtflächen bei einer Rotation des Hochdruckwerkzeugs 36 vermieden werden.

Insbesondere besteht der Vorteil bei der Umschaltvorrichtung 14 darin, dass für die Mehrzahl der Hochdruckwerkzeuge 36 nur eine Ventileinrichtung 152 vorgesehen werden muss, wobei den Hochdruckwerkzeugen 36 jeweils zugeordnete Ventileinrichtungen nicht erforderlich sind. Auf diese Weise kann die Anzahl erforderlicher Teile für die Konstruktion der Umschaltvorrichtung 14 verringert werden. Dies bietet Vorteile hinsichtlich Herstellungskosten und Montageaufwand. Die Wartung der Umschaltvorrichtung 14 wird vereinfacht. Günstig für die Montage und die Wartung ist insbesondere, dass die vormontierte Baueinheit 96 vorgesehen ist, die nach Entfernen eines Hochdruckwerkzeugs 36 und des Abdeckteils 142 der Aufnahme 92 als Ganzes entnommen werden kann (Figur 8). Bei der Montage wird zunächst die Baueinheit 96 in die Aufnahme 92 eingesetzt, anschließend das Abdeckteil 142 und schließlich das Hochdruckwerkzeug 36 mit dem zugehörigen Werkzeughalteteil 74 am Verstellelement 40 fixiert.

Die Zuströmhülse 144 ist bei der Montage Teil der Baueinheit 96. Bei deren Fixierung mittels des Abdeckteils 142 wird die Zuströmhülse 144 relativ zum Abdeckteil 142 unverdrehbar fixiert. Die Dichtpackung 146 kann demgegenüber mit dem Drehkörper 90 rotieren.

Die Baueinheit 96 bietet insbesondere eine Drehdurchführung 154 zum Bereitstellen des abgedichteten Übergangs, auch unter Hochdruck, zwischen der Halteeinrichtung 32 und der über den Drehkörper 90 vermittelten Rotation des Hochdruckwerkzeugs 36. Von Vorteil ist insbesondere, dass für die Mehrzahl der Hochdruckwerkzeuge 36 nur eine Drehdurchführung 154 erforderlich ist, in entsprechender Weise wie im Fall der nur einen Ventileinrichtung 152.

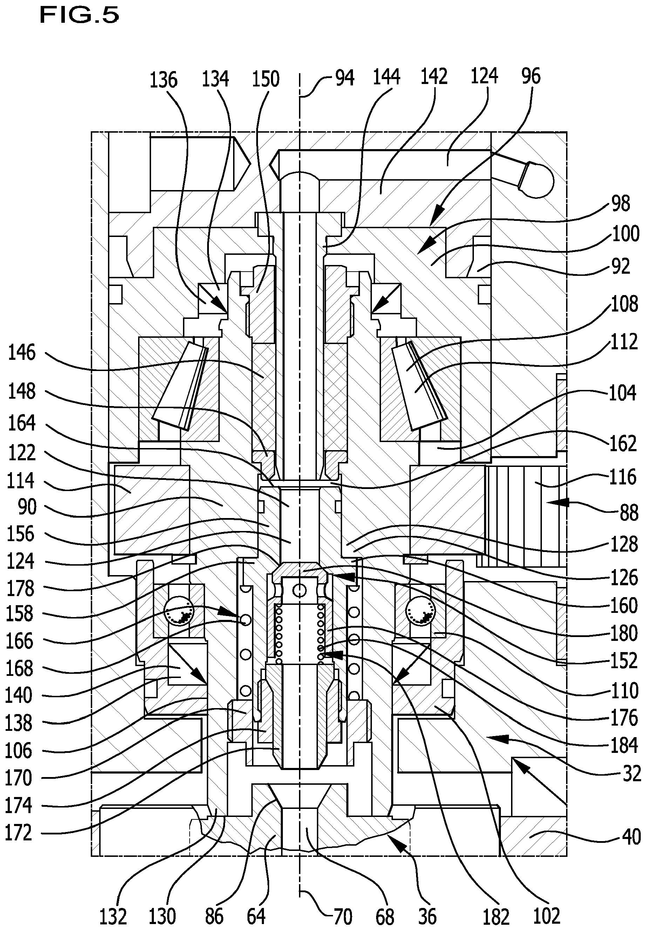

Wie insbesondere aus den Figuren 5 bis 7 deutlich wird, umfasst die Ventileinrichtung 152 einen Steuerkörper 156. Der Steuerkörper 156 ist hülsenförmig ausgestaltet und im Drehkörper 90 aufgenommen. An einer Verbreiterung 158 des Steuerkörpers 156 ist ein Anlageelement 160 gebildet, über das der Steuerkörper 156 in einer Grundstellung an dem Anlageelement 128 anliegen kann (Figur 5).

In diesem Fall ist ein Zwischenraum 162 zwischen einer strömungsaufwärts angeordneten Stirnseite 164 des Steuerkörpers 156 und dem Anschlagelement 148 gebildet, so dass eine ringförmige Stirnfläche des Steuerkörpers 156 mit Reinigungsflüssigkeit beaufschlagt werden kann.

Der Steuerkörper 156 stützt sich mittels einer Rückstelleinrichtung 166, umfassend ein Rückstellelement 168 in Gestalt einer Schraubenfeder, an einem mit dem Drehkörper 90 fest verbundenen Halteelement 171 ab, beispielsweise in Gestalt einer Einschraubhülse.

Der Steuerkörper 156 ist ein Steuerkolben, der entgegen der Wirkung des Rückstellelementes 168 axial relativ zum Drehkörper 90 verschoben werden kann.

Am Steuerkörper 156 ist ein Ventilkörper 172 der Ventileinrichtung 152 angeordnet, der vorliegend getrennt vom Steuerkörper 156 gebildet und mit diesem verbunden ist. Beispielsweise ist ein Halteelement 174 in Gestalt einer Schraubhülse zum Fixieren des Ventilkörpers 172 vorgesehen. Der Ventilkörper 172 ist korrespondierend zum Ventilsitz 86 ausgebildet und umfasst einen Dichtkonus. Der Ventilkörper 172 kann mit dem Ventilsitz 86 zusammenwirken, wenn der Steuerkörper 156 in Richtung des Hochdruckwerkzeugs 36 verschoben wird.

Die Ventileinrichtung 152 weist einen Ventilkörper 176 auf, über den vorliegend mit einem korrespondierenden Ventilsitz 178 am Steuerkörper 156 ein Druckhalteventil ausgebildet ist. Der Ventilkörper 176 ist als Kolben ausgebildet, im Steuerkörper 156 angeordnet und relativ zu diesem beweglich und insbesondere verschieblich ausgestaltet. An einer in Zuströmrichtung angeordneten Stirnseite 180 im Zufuhrkanal 124 kann der Ventilkörper 176 mit Reinigungsflüssigkeit beaufschlagt werden. Die Stirnfläche ist geringer als die Stirnfläche des Steuerkörpers 156. Der Ventilkörper 176 wird erst bei höherem Druck der Reinigungsflüssigkeit vom Ventilsitz 178 angehoben als der Steuerkörper 156 verschoben wird.

Eine Rückstelleinrichtung 182 mit einem Rückstellelement 184, vorliegend in Gestalt einer Schraubenfeder, beaufschlagt den Ventilkörper 176 mit einer Rückstellkraft in Richtung des Ventilsitzes 178. Das Rückstellelement 184 stützt sich vorliegend am Ventilkörper 172 ab.

Der Ventilsitz 178 ist im Bereich der Verbreiterung 158 angeordnet, an einer dem Anlageelement 160 gegenüberliegenden Seite. Der Ventileinrichtung 152 kann dadurch axial und radial eine kompakte Bauform verliehen werden.

Der Drehkörper 90, der Steuerkörper 156, der Ventilkörper 172 und der Ventilkörper 176 sind koaxial zueinander bezüglich der Drehachse 94 ausgerichtet.

In korrekter Sollposition in der Betriebsstellung ist das Hochdruckwerkzeug 36 koaxial zum Drehkörper 90 ausgerichtet, wobei die Werkzeugachse 70 mit der Drehachse 94 fluchtet und der Werkzeugkanal 68 mit dem Abschnitt 122 des Zufuhrkanals 124 fluchtet.

Bei Inbetriebnahme der Umschaltvorrichtung 14 oder Wechsel des Hochdruckwerkzeugs 36 ist die Ventileinrichtung 28 geschlossen und/oder das Pumpaggregat 24 deaktiviert. Ohne Druckbeaufschlagung nimmt der Steuerkörper 156 eine Grundstellung ein, in der die Anlageelemente 128, 160 aneinander anliegen, unter der Wirkung des Rückstellelementes 168. Der Ventilkörper 172 ist von dem in die Betriebsstellung geführten Hochdruckwerkzeug 36 und insbesondere dessen Ventilsitz 86 beabstandet. Der Ventilkörper 176 nimmt eine Dichtstellung ein, in der er unter der Wirkung des Rückstellelementes 184 dichtend am Ventilsitz 178 anliegt und den Zufuhrkanal 124 sperrt (Figur 5).

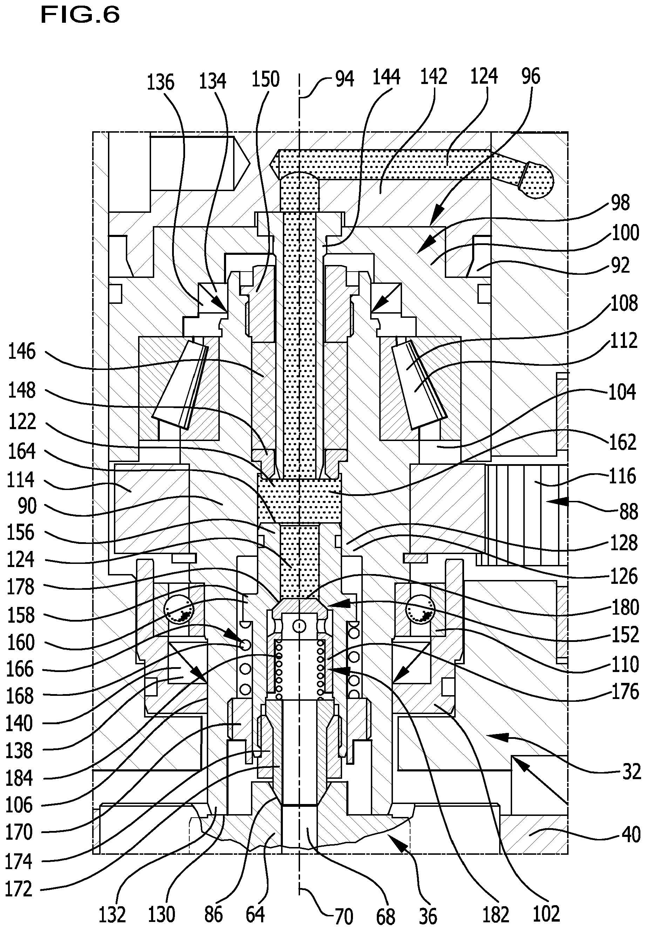

Steigt der Druck der Reinigungsflüssigkeit bei freigegebener Fluidleitung 26 an, beispielsweise auf einen Vordruck von ungefähr 5 bar bis 10 bar, wird der Steuerkörper 156 relativ zum Drehkörper 90 axial in Richtung auf das Hochdruckwerkzeug 36 verschoben (Figur 6) und von der Grundstellung in eine Ausrichtstellung überführt. Der am Ventilsitz 178 anliegende Ventilkörper 176 wird ebenso verschoben, behält aber seine Dichtstellung bei.

In der Ausrichtstellung gelangt der Ventilkörper 172 zur dichtenden Anlage an den Ventilsitz 86. Günstigerweise wird die Verstelleinheit 54 kurzfristig passiv geschaltet, wodurch eine korrekte und zuverlässige Ausrichtung des Hochdruckwerkzeugs 36 relativ zur Ventileinrichtung 152 erzielt werden kann. Gleichzeitig wird eine fluiddichte Verbindung zwischen dem Zufuhrkanal 124 und dem Werkzeugkanal 68 sichergestellt.

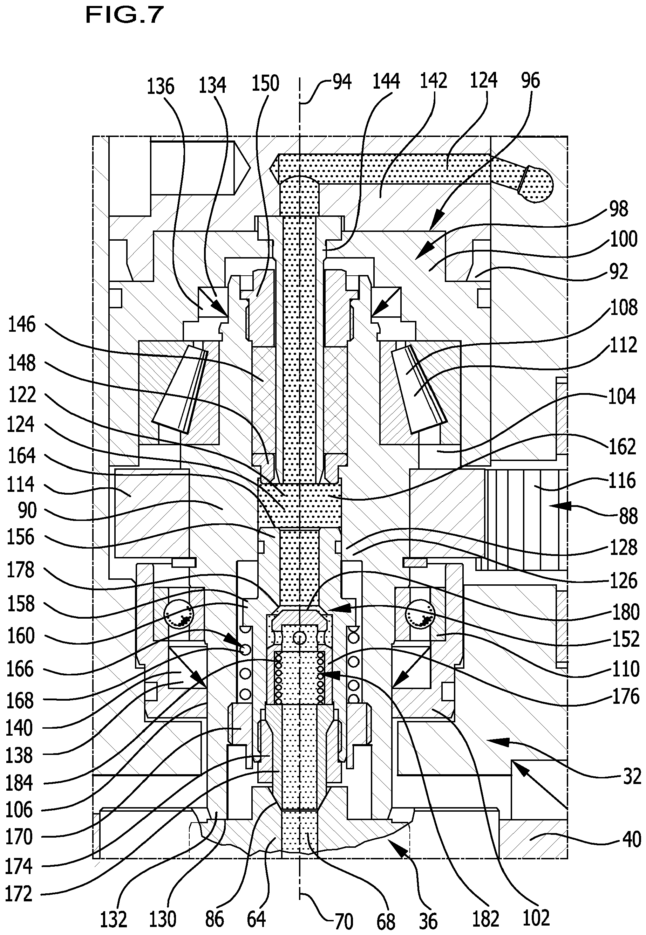

Bei noch höherem Druck, insbesondere Erreichen des Betriebsdrucks von beispielsweise ungefähr 600 bar, wird der Ventilkörper 176 vom Ventilsitz 178 angehoben und in eine Freigabestellung überführt. Reinigungsflüssigkeit strömt am Ventilsitz 178 vorbei und durch die Ventilkörper 176, 172 zum Hochdruckwerkzeug 36 (Figur 7).

Auch bei Betriebsdruck wird der Steuerkörper 156 weiterhin mit Druck beaufschlagt. Die fluiddichte Verbindung am Ventilsitz 86 ist dadurch auch bei hohen Betriebsdrücken gewährleistet.

Die auftretenden axialen Kräfte im Bereich des Dichtkonus werden in günstiger Weise von den gegeneinander angestellten Kegelrollenlagern 80, 112 aufgenommen.

Entfällt der Druck der Reinigungsflüssigkeit, kehrt der Ventilkörper 176 unter der Wirkung des Rückstellelementes 184 in die Dichtstellung zurück. Der Steuerkörper 156 kehrt unter der Wirkung des Rückstellelementes 168 in die Grundstellung zurück.

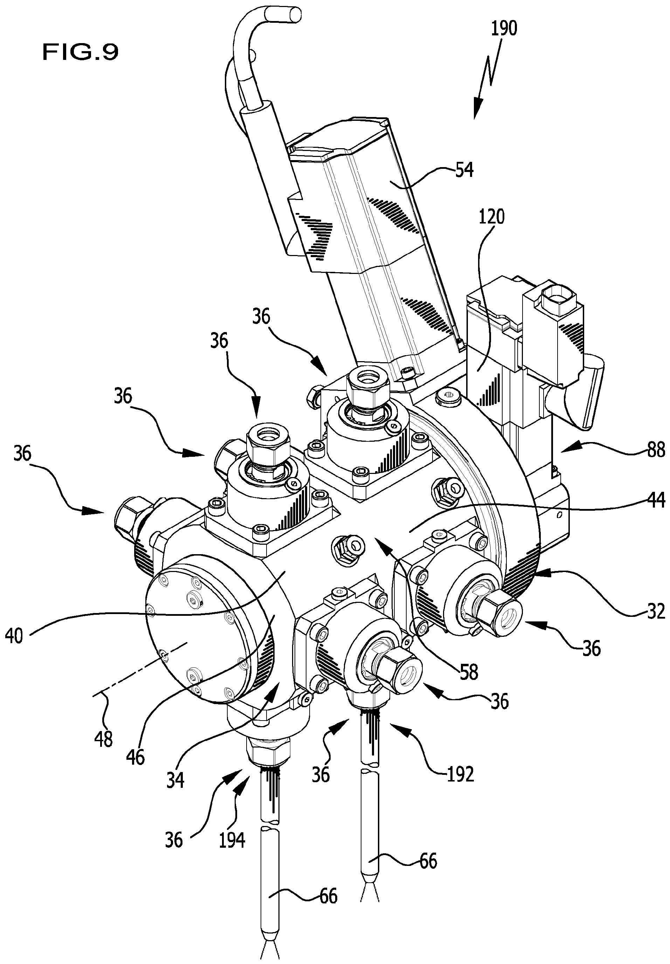

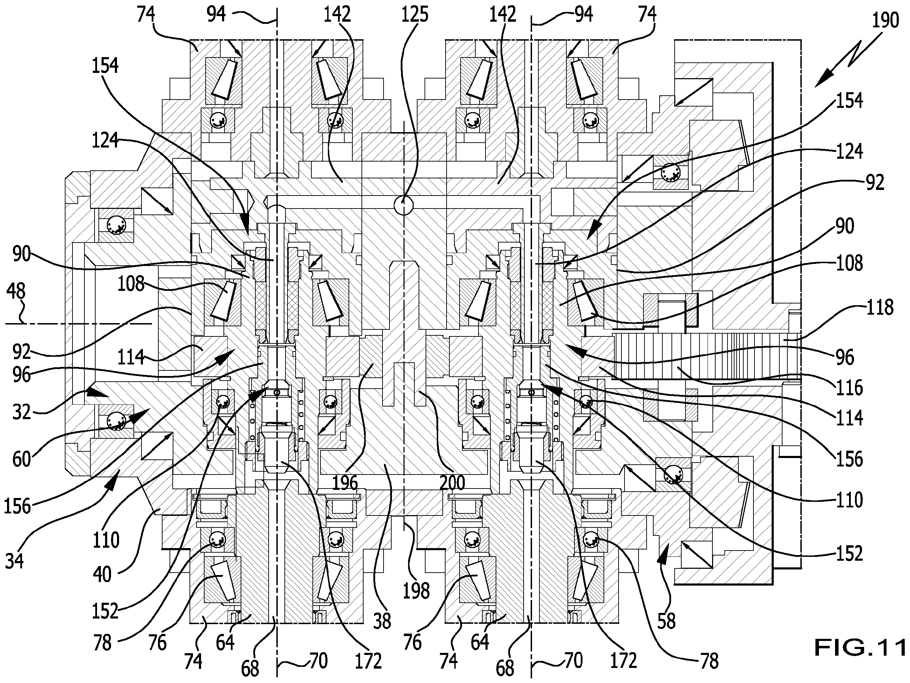

Die Figuren 9 bis 11 zeigen eine weitere bevorzugte Ausführungsform der erfindungsgemäßen Umschaltvorrichtung, die insgesamt mit dem Bezugszeichen 190 belegt ist. Die mit der Umschaltvorrichtung 14 erzielbaren Vorteile können mit der Umschaltvorrichtung 190 ebenfalls erzielt werden, so dass diesbezüglich zur Vermeidung von Wiederholungen auf die voranstehenden Ausführungen verwiesen werden kann. Es wird nachfolgend lediglich auf die wesentlichen Unterschiede eingegangen.

Die Umschaltvorrichtung 190 kann als Bestandteil der Reinigungsvorrichtung 10 anstelle der Umschaltvorrichtung 14 oder zusammen mit dieser eingesetzt werden. Dabei kann die Umschaltvorrichtung 190 insbesondere am Roboterarm 18 gehalten und relativ zum Werkstück 12 bewegt werden.

Aus den nachfolgenden Erläuterungen geht hervor, dass mittels der Umschaltvorrichtung 190 vorzugsweise eine gleichzeitige Bearbeitung von zwei Werkstücken 12 möglich ist. Zu diesem Zweck sind die Werkstücke 12 vorzugsweise gemeinsam an der Aufnahmeeinrichtung 22 gehalten.

Unter Einsatz der Umschaltvorrichtung 190 kann die Taktzeit für die Bearbeitung und/oder Reinigung der Werkstücke 12 erheblich verringert werden.

Wie aus den Figuren 9 bis 11 hervorgeht, umfasst die Umschaltvorrichtung 190 die Halteeinrichtung 32, die Verstelleinrichtung 34 und die Antriebseinrichtung 88. Die Verstelleinrichtung 34 umfasst das Verstellelement 40 als Rotor 58. Der Rotor 58 ist relativ zum von der Halteeinrichtung 32 gebildeten Stator 60 um die Drehachse 48 drehbar.

Bei der Umschaltvorrichtung 190 bilden die bislang erläuterten Hochdruckwerkzeuge 36 eine erste Gruppe 192 von Hochdruckwerkzeugen 36. Darüber hinaus ist eine zweite Gruppe 194 von Hochdruckwerkzeugen 36 vorgesehen. Gegenüber der Umschaltvorrichtung 14 ist die Anzahl der Hochdruckwerkzeuge 36 insbesondere verdoppelt.

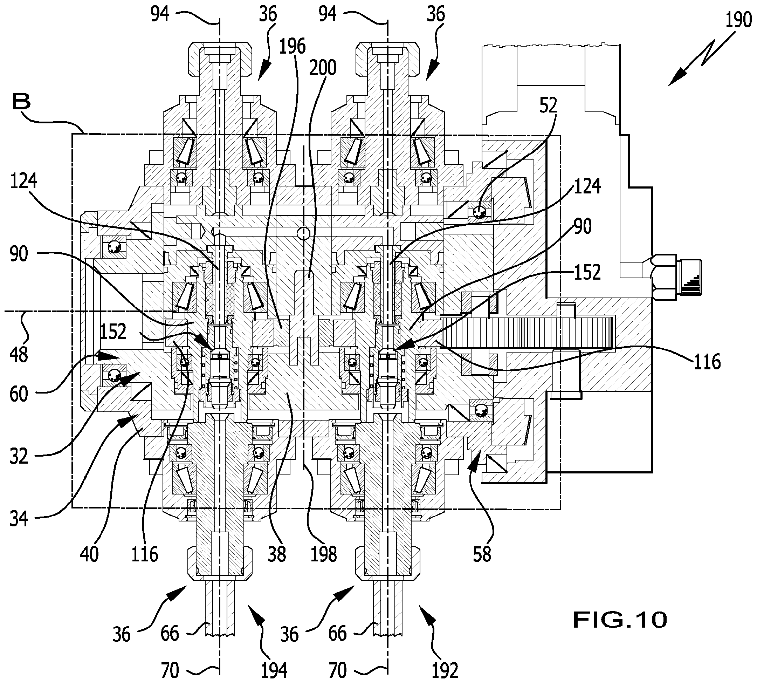

Jedem Hochdruckwerkzeug 36 der ersten Gruppe 192 ist ein Hochdruckwerkzeug 36 der zweiten Gruppe 194 zugeordnet. Die Hochdruckwerkzeuge 36 beider Gruppen 192, 194 sind axial bezogen auf die Drehachse 48 seitlich nebeneinander am Rotor 58 angeordnet. In Umfangsrichtung der Drehachse 48 sind die Hochdruckwerkzeuge 36 beider Gruppen 192, 194 an derselben Position angeordnet (Figuren 9 und 10).

Hierbei ist insbesondere vorgesehen, dass die die jeweilige Betriebsstellung einnehmenden Hochdruckwerkzeuge 36 beider Gruppen 192, 194 identisch ausgestaltet sind.

Den Hochdruckwerkzeugen 36 der zweiten Gruppe 194 ist eine zweite Baueinheit 96 zugeordnet. Für diese ist eine weitere Aufnahme 92 im Grundkörper 38 gebildet.

Die weitere Baueinheit 96 ist identisch zur vorstehend beschriebenen Baueinheit 96 ausgestaltet und umfasst insbesondere einen weiteren Drehkörper 90, eine weitere Ventileinrichtung 152 und einen weiteren Zufuhrkanal 124. Ebenfalls vorgesehen sind Lagereinrichtungen 108, 110, das Aufnahmeteil 98 und das Antriebselement 114. In Bezug auf den weiteren Aufbau der Baueinheit 96 wird auf die obigen Ausführungen verwiesen.

Die Drehkörper 90 sind so angeordnet, dass die Drehachsen 94 parallel zueinander ausgerichtet sind. Die Drehachse 94 des weiteren Drehkörpers 90 fällt mit der Werkzeugachse 70 des die jeweilige Betriebsstellung einnehmenden Hochdruckwerkzeugs 36 der zweiten Gruppe 194 zusammen.

Infolgedessen sind die die jeweilige Betriebsstellung einnehmenden Hochdruckwerkzeuge 36 beider Gruppen 192, 194 mit parallel zueinander ausgerichteten Werkzeugachsen 70 ausgerichtet.

Die Zufuhrkanäle 124, die in beiden Drehkörpern 90 als axiale Durchgangskanäle verlaufen, münden aufstromseitig der Drehkörper 90 in einander. Hierbei verlaufen die Zufuhrkanäle 124 durch die Abdeckteile 142 und münden in den im Grundkörper 38 gebildeten Abschnitt 125. Beide Zufuhrkanäle 124 und damit die beiden die Betriebsstellung einnehmenden Hochdruckwerkzeuge 36 können dadurch gemeinsam über die Fluidleitung 26 mit Reinigungsflüssigkeit beaufschlagt werden.

Jede Baueinheit 96 weist das als Antriebsrad, insbesondere Zahnrad, ausgestaltete Antriebselement 114 auf. Die Antriebselemente 116 beider Baueinheiten 96 sind miteinander gekoppelt. Zu diesem Zweck kommt ein weiteres als Antriebsrad, insbesondere als Zahnrad, ausgestaltetes Antriebselement 196 zum Einsatz.

Das Antriebselement 196 ist auf einer im Grundkörper 38 um eine Drehachse 198 festgelegten Welle 200 festgelegt und steht mit beiden Antriebselementen 114 in Eingriff. Dadurch werden beide Drehkörper 90 und damit beide die Betriebsstellung einnehmenden Hochdruckwerkzeuge 36 beider Gruppen 192, 194 in demselben Drehsinn um die jeweiligen Achsen 94, 70 gedreht. Die Antriebselemente 114 sind identisch ausgestaltet, so dass die Drehzahlen identisch sind.

Auch die weitere Baueinheit 96 kann als Ganzes vormontiert in die weitere Aufnahme 92 eingesetzt oder dieser entnommen werden, wie dies vorstehend insbesondere unter Verweis auf Figur 8 beschrieben wurde.

Konstruktiv einfach kann die Umschaltvorrichtung 190 im Verhältnis zur Umschaltvorrichtung 14 dadurch umgesetzt werden, dass der Rotor 58 und der Stator 60 axial entlang der Drehachse 48 verlängert werden und die zusätzliche Aufnahme 92 sowie die Anschlüsse für die Hochdruckwerkzeuge 36 bereitgestellt werden. Somit weist auch die Umschaltvorrichtung 190 eine besonders kompakte Bauform auf.

Hierzu ist es insbesondere auch von Vorteil, dass über die weitere Baueinheit 96 eine weitere Drehdurchführung 154 gebildet ist. Auch für die Mehrzahl der Hochdruckwerkzeuge 36 der zweiten Gruppe 194 ist nur eine Drehdurchführung 154 erforderlich.

### Bezugszeichenliste:

- 10: Reinigungsvorrichtung
- 12: Werkstück
- 14: Umschaltvorrichtung
- 16: Verstelleinrichtung
- 18: Roboterarm
- 20: Aufstellfläche
- 22: Aufnahmeeinrichtung
- 24: Pumpaggregat
- 26: Fluidleitung
- 28: Ventileinrichtung
- 30: Steuereinrichtung
- 32: Halteeinrichtung
- 34: Verstelleinrichtung
- 36: Hochdruckwerkzeug
- 38: Grundkörper
- 40: Verstellelement
- 42: Seite
- 44: umlaufende Wand
- 46: Deckenwand
- 48: Drehachse
- 50: Lagereinrichtung
- 52: Lagereinrichtung
- 54: Verstelleinheit
- 56: Verzahnung
- 58: Rotor
- 60: Stator
- 64: Basisabschnitt
- 66: Abgabeabschnitt
- 68: Werkzeugkanal
- 70: Werkzeugachse
- 72: Düse
- 74: Werkzeughalteteil
- 76: Lagereinrichtung
- 78: Lagereinrichtung
- 80: Kegelrollenlager
- 82: Dichtelement
- 84: Wellendichtring
- 86: Ventilsitz
- 88: Antriebseinrichtung
- 90: Drehkörper
- 92: Aufnahme
- 94: Drehachse
- 96: Baueinheit
- 98: Aufnahmeteil
- 100: erster Abschnitt
- 102: zweiter Abschnitt
- 104: Aufnahmeraum
- 106: Öffnung
- 108: Lagereinrichtung
- 110: Lagereinrichtung
- 112: Kegelrollenlager
- 114: Antriebselement
- 116: Antriebselement
- 118: Antriebselement
- 120: Antriebseinheit
- 122: Abschnitt
- 124: Zufuhrkanal
- 125: Abschnitt
- 126: Verbreiterung
- 128: Anlageelement
- 130: Seite
- 132: Eingriffselement
- 134: Dichtelement
- 136: Wellendichtring
- 138: Dichtelement
- 140: Wellendichtring
- 142: Abdeckteil
- 144: Zuströmhülse
- 146: Dichtpackung
- 148: Anschlagelement
- 150: Halteelement
- 152: Ventileinrichtung
- 154: Drehdurchführung
- 156: Steuerkörper
- 158: Verbreiterung
- 160: Anlageelement
- 162: Zwischenraum
- 164: Stirnseite
- 166: Rückstelleinrichtung
- 168: Rückstellelement
- 170: Halteelement
- 172: Ventilkörper
- 174: Halteelement
- 176: Ventilkörper
- 178: Ventilsitz
- 180: Stirnseite
- 182: Rückstelleinrichtung
- 184: Rückstellelement
- 190: Umschaltvorrichtung
- 192: erste Gruppe
- 194: zweite Gruppe
- 196: Antriebselement
- 198: Drehachse
- 200: Welle

## Patentansprüche

1. Umschaltvorrichtung für Hochdruckwerkzeuge,
umfassend eine Halteeinrichtung (32) und zwei oder mehr Hochdruckwerkzeuge (36) für Reinigungszwecke,
eine Antriebseinrichtung (88) und einen mittels dieser relativ zur Halteeinrichtung (32) um eine Drehachse (94) drehbaren Drehkörper (90), eine Verstelleinrichtung (34), mit der wahlweise eines der Hochdruckwerkzeuge (36) von einer Außerbetriebsstellung in eine Betriebsstellung überführbar ist, in welcher Betriebsstellung das Hochdruckwerkzeug (36) drehfest mit dem Drehkörper (90) gekoppelt und über diesen um eine Werkzeugachse (70) drehend antreibbar ist,
wobei die Umschaltvorrichtung (14; 190) einen Zufuhrkanal (124) für unter Druck gesetzte Reinigungsflüssigkeit umfasst oder ausbildet und das jeweilige Hochdruckwerkzeug (36) einen Werkzeugkanal (68) für Reinigungsflüssigkeit umfasst oder ausbildet, der im Betrieb in Strömungsverbindung mit dem Zufuhrkanal (124) steht oder bringbar ist, wobei die Umschaltvorrichtung (14; 190) ferner eine Ventileinrichtung (152) umfasst, mit der der Zufuhrkanal (124) wahlweise freigebbar und verschließbar ist, und
wobei der Zufuhrkanal (124) zumindest abschnittsweise im Drehkörper (90) gebildet ist,
**dadurch gekennzeichnet,**
**dass** die Ventileinrichtung (152) am Drehkörper (90) angeordnet ist.

2. Umschaltvorrichtung nach Anspruch 1, **dadurch gekennzeichnet, dass** die Umschaltvorrichtung (14; 190) eine Drehdurchführung (154) für Reinigungsflüssigkeit von der Halteeinrichtung (32) zum Hochdruckwerkzeug (36) umfasst, wobei die Drehdurchführung (154) mit der am Drehkörper (90) angeordneten Ventileinrichtung (152) gezielt zur Zufuhr von Reinigungsflüssigkeit freigebbar oder sperrbar ist.

3. Umschaltvorrichtung nach einem der voranstehenden Ansprüche, **dadurch gekennzeichnet, dass** die Ventileinrichtung (152) vom Drehkörper (90) umfasst ist oder zumindest teilweise im Drehkörper (90) angeordnet ist.

4. Umschaltvorrichtung nach einem der voranstehenden Ansprüche, **dadurch gekennzeichnet, dass** der Drehkörper (90) koaxial zum Hochdruckwerkzeug (36) in dessen Betriebsstellung ausgerichtet ist, wobei vorzugsweise der im Drehkörper (90) gebildete Abschnitt (122) des Zufuhrkanals (124) koaxial zum Werkzeugkanal (68) ausgerichtet ist.

5. Umschaltvorrichtung nach einem der voranstehenden Ansprüche, **dadurch gekennzeichnet, dass** die Ventileinrichtung einen Steuerkörper (156) umfasst, der relativ zum Drehkörper (90) beweglich ist und in einer den Zufuhrkanal (124) verschließenden Grundstellung an einem Anlageelement (128) des Drehkörpers (90) anliegt und in einer Ausrichtstellung vom Anlageelement (128) angehoben ist, wobei der Steuerkörper (156) einen Ventilkörper (172) umfasst oder ausbildet oder ein solcher am Steuerkörper (156) angeordnet ist, der in dessen Ausrichtstellung dichtend an einem Ventilsitz (86) des Werkzeugkanals (68) anliegt und in der Grundstellung von diesem Ventilsitz (86) angehoben ist, wobei vorzugsweise der Steuerkörper (156) mittels unter Druck gesetzter Reinigungsflüssigkeit in die Ausrichtstellung überführbar ist.

6. Umschaltvorrichtung nach Anspruch 5, **dadurch gekennzeichnet, dass** der Steuerkörper (156) entgegen der Wirkung einer Rückstelleinrichtung (166) von der Dichtstellung in die Ausrichtstellung überführbar ist, wobei die Rückstelleinrichtung (166) vorzugsweise ein elastisch verformbares Rückstellelement (168) umfasst oder bildet.

7. Umschaltvorrichtung nach einem der Ansprüche 5 oder 6, **dadurch gekennzeichnet, dass** die Ventileinrichtung (152) einen Ventilkörper (176) umfasst oder ausbildet, der relativ zum Steuerkörper (156) beweglich ist, wobei der Ventilkörper (176) in einer den Zufuhrkanal (124) verschließenden Dichtstellung an einem Ventilsitz (178) des Steuerkörpers (156) dichtend oder im Wesentlichen dichtend anliegt und in einer Freigabestellung den Zufuhrkanal freigebend vom Ventilsitz (156) angehoben ist.

8. Umschaltvorrichtung nach einem der voranstehenden Ansprüche, **dadurch gekennzeichnet, dass** die Umschaltvorrichtung (14; 190) mindestens eine Lagereinrichtung (108, 110) umfasst, wobei der Drehkörper (90) über die mindestens eine Lagereinrichtung (108, 110) direkt oder indirekt drehbar relativ zur Halteeinrichtung (32) gelagert ist.

9. Umschaltvorrichtung nach einem der voranstehenden Ansprüche, **dadurch gekennzeichnet, dass** die Umschaltvorrichtung (14; 190) mindestens eine Lagereinrichtung (76, 78) umfasst, wobei das Hochdruckwerkzeug (36) über die mindestens eine Lagereinrichtung (76, 78) direkt oder indirekt drehbar relativ zur Verstelleinrichtung (34) gelagert ist.

10. Umschaltvorrichtung nach einem der voranstehenden Ansprüche, **dadurch gekennzeichnet, dass** mindestens eine Lagereinrichtung (76, 78, 108, 110) ein Radiallager und/oder ein Axiallager bezüglich der Drehachse (94) und/oder der Werkzeugachse (70) umfasst oder bildet.

11. Umschaltvorrichtung nach einem der voranstehenden Ansprüche, **dadurch gekennzeichnet, dass** eine erste Lagereinrichtung (76) und eine zweite Lagereinrichtung (108) vorgesehen sind, die als gegeneinander angestellte Axiallager ausgestaltet sind oder solche umfassen, wobei die Lagereinrichtungen (76, 108) vorzugsweise Kegelrollenlager (80, 112) sind.

12. Umschaltvorrichtung nach einem der voranstehenden Ansprüche, **dadurch gekennzeichnet, dass** die Antriebseinrichtung (88) ein drehfest mit dem Drehkörper (90) gekoppeltes Antriebselement (114) umfasst, das über eine Antriebseinheit (120) mit einer Antriebskraft beaufschlagbar ist.

13. Umschaltvorrichtung nach einem der voranstehenden Ansprüche, **dadurch gekennzeichnet, dass** die Halteeinrichtung (32) einen Grundkörper (38) umfasst, in dem eine Aufnahme (52) für den Drehkörper (90) und die Ventileinrichtung (152) gebildet ist, und dass der Drehkörper (90) direkt oder indirekt über mindestens eine Lagereinrichtung (108, 110) relativ zum Grundkörper (38) drehbar gelagert ist.

14. Umschaltvorrichtung nach einem der voranstehenden Ansprüche, **dadurch gekennzeichnet, dass** die zwei oder mehr Hochdruckwerkzeuge (36) eine erste Gruppe von Hochdruckwerkzeugen (36) der Umschaltvorrichtung (14; 190) bilden, und dass die Umschaltvorrichtung (14; 190) eine weitere Gruppe von zwei oder mehr Hochdruckwerkzeugen (36) umfasst, denen ein weiterer mittels der Antriebseinrichtung (88) relativ zur Halteeinrichtung (32) um eine weitere Drehachse (94) drehbarer Drehkörper (90) zugeordnet ist, wobei mittels der Verstelleinrichtung (34) wahlweise eines der Hochdruckwerkzeuge (36) der weiteren Gruppe von Hochdruckwerkzeugen (36) von einer Außerbetriebsstellung in eine Betriebsstellung überführbar ist, in welcher Betriebsstellung das Hochdruckwerkzeug (36) drehfest mit dem weiteren Drehkörper (90) gekoppelt und über diesen um eine weitere Werkzeugachse (70) drehend antreibbar ist, wobei die Umschaltvorrichtung (14; 190) einen weiteren Zufuhrkanal (124) für unter Druck gesetzte Reinigungsflüssigkeit umfasst oder ausbildet und das jeweilige Hochdruckwerkzeug (36) der weiteren Gruppe von Hochdruckwerkzeugen (36) einen Werkzeugkanal (68) für Reinigungsflüssigkeit umfasst oder ausbildet, der im Betrieb in Strömungsverbindung mit dem weiteren Zufuhrkanal (124) steht oder bringbar ist, wobei die Umschaltvorrichtung (14; 190) ferner eine weitere Ventileinrichtung (152) umfasst, mit der der weitere Zufuhrkanal (124) wahlweise freigebbar und verschließbar ist, wobei der weitere Zufuhrkanal (124) zumindest abschnittsweise im weiteren Drehkörper (90) gebildet ist und die weitere Ventileinrichtung (152) am weiteren Drehkörper (90) angeordnet ist.

15. Reinigungsvorrichtung, umfassend mindestens eine Umschaltvorrichtung (10) nach einem der voranstehenden Ansprüche und ein Pumpaggregat (24), das mit dem Zufuhrkanal (124) der Umschaltvorrichtung (14; 190) in Strömungsverbindung steht oder bringbar ist.

## Claims

1. Switching apparatus for high pressure tools,
comprising a holding device (32) and two or more high pressure tools (36) for cleaning purposes,
a drive device (88) and a rotary body (90) that is rotatable relative to the holding device (32) about an axis of rotation (94) by means of said drive device (88),
an adjusting device (34) with which one of the high pressure tools (36) is selectively transferable from an inoperative position into an operating position, in which operating position the high pressure tool (36) is coupled to the rotary body (90) in a rotationally fixed manner and is rotationally drivable about a tool axis (70) by way of said rotary body (90), wherein the switching apparatus (14; 190) comprises or forms a supply channel (124) for pressurized cleaning liquid and the respective high pressure tool (36) comprises or forms a tool channel (68) for cleaning liquid, which is in flow connection or can be brought into flow connection with the supply channel (124) during operation,
wherein the switching apparatus (14; 190) further comprises a valve device (152) with which the supply channel (124) is selectively unblockable and closable, and
wherein the supply channel (124) is formed in the rotary body (90) at least in sections,
**characterized in that**
the valve device (152) is arranged on the rotary body (90).

2. Switching apparatus in accordance with Claim 1, **characterized in that** the switching apparatus (14; 190) comprises a rotary passage (154) for cleaning liquid from the holding device (32) to the high pressure tool (36), wherein the rotary passage (154) with the valve device (152) arranged on the rotary body (90) is unblockable in a targeted manner for supplying cleaning liquid or blockable.

3. Switching apparatus in accordance with any one of the preceding Claims, **characterized in that** the valve device (152) is comprised by the rotary body (90) or is at least partially arranged in the rotary body (90).

4. Switching apparatus in accordance with any one of the preceding Claims, **characterized in that** the rotary body (90) is aligned coaxially to the high pressure tool (36) in the operating position thereof, wherein preferably the portion (122) of the supply channel (124) formed in the rotary body (90) is aligned coaxially to the tool channel (68).

5. Switching apparatus in accordance with any one of the preceding Claims, **characterized in that** the valve device comprises a control body (156) that is movable relative to the rotary body (90) and in a base position closing the supply channel (124) abuts against an abutment element (128) of the rotary body (90) and in an alignment position is raised from the abutment element (128), wherein the control body (156) comprises or forms a valve body (172) or such a valve body (172) is arranged on the control body (156), which valve body (172) in the alignment position of the control body (156) sealingly abuts against a valve seat (86) of the tool channel (68) and in the base position is raised from said valve seat (86), wherein preferably the control body (156) is transferable into the alignment position by means of pressurized cleaning liquid.

6. Switching apparatus in accordance with Claim 5, **characterized in that** the control body (156) is transferable from the sealing position into the alignment position against the action of a restoring device (166), wherein the restoring device (166) preferably comprises or forms an elastically deformable restoring element (168).

7. Switching apparatus in accordance with either of Claims 5 or 6, **characterized in that** the valve device (152) comprises or forms a valve body (176) that is movable relative to the control body (156), wherein the valve body (176) in a sealing position closing the supply channel (124) sealingly or substantially sealingly abuts against a valve seat (178) of the control body (156) and in an unblocking position is raised from the valve seat (156) so as to unblock the supply channel.

8. Switching apparatus in accordance with any one of the preceding Claims, **characterized in that** the switching apparatus (14; 190) comprises at least one bearing device (108, 110), wherein the rotary body (90) is directly or indirectly mounted by way of the at least one bearing device (108, 110) so as to be rotatable relative to the holding device (32).

9. Switching apparatus in accordance with any one of the preceding Claims, **characterized in that** the switching apparatus (14; 190) comprises at least one bearing device (76, 78), wherein the high pressure tool (36) is directly or indirectly mounted by way of the at least one bearing device (76, 78) so as to be rotatable relative to the adjusting device (34).

10. Switching apparatus in accordance with any one of the preceding Claims, **characterized in that** at least one bearing device (76, 78, 108, 110) comprises or forms a radial bearing and/or an axial bearing relative to the axis of rotation (94) and/or the tool axis (70).

11. Switching apparatus in accordance with any one of the preceding Claims, **characterized in that** a first bearing device (76) and a second bearing device (108) are provided, which are configured as or comprise axial bearings set against one another, wherein the bearing devices (76, 108) are preferably tapered roller bearings (80, 112).

12. Switching apparatus in accordance with any one of the preceding Claims, **characterized in that** the drive device (88) comprises a drive element (114) that is coupled to the rotary body (90) in a rotationally fixed manner and can be acted upon with a driving force by way of a drive unit (120).

13. Switching apparatus in accordance with any one of the preceding Claims, **characterized in that** the holding device (32) comprises a base body (38) in which a receptacle (52) for the rotary body (90) and the valve device (152) is formed, and **in that** the rotary body (90) is directly or indirectly rotatably mounted relative to the base body (38) by way of at least one bearing device (108, 110).

14. Switching apparatus in accordance with any one of the preceding Claims, **characterized in that** the two or more high pressure tools (36) form a first group of high pressure tools (36) of the switching apparatus (14; 190), and **in that** the switching apparatus (14; 190) comprises a further group of two or more high pressure tools (36), with which a further rotary body (90) that is rotatable relative to the holding device (32) about a further axis of rotation (94) by means of the drive device (88) is associated, wherein one of the high pressure tools (36) of the further group of high pressure tools (36) is selectively transferable from an inoperative position into an operating position by means of the adjusting device (34), in which operating position the high pressure tool (36) is coupled to the further rotary body (90) in a rotationally fixed manner and is rotationally drivable about a further tool axis (70) by way of said further rotary body (90), wherein the switching apparatus (14; 190) comprises or forms a further supply channel (124) for pressurized cleaning liquid and the respective high pressure tool (36) of the further group of high pressure tools (36) comprises or forms a tool channel (68) for cleaning liquid, which is in flow connection or can be brought into flow connection with the further supply channel (124) during operation, wherein the switching apparatus (14; 190) further comprises a further valve device (152) with which the further supply channel (124) is selectively unblockable and closable, wherein the further supply channel (124) is formed in the further rotary body (90) at least in sections and the further valve device (152) is arranged on the further rotary body (90).

15. Cleaning apparatus, comprising at least one switching apparatus (10) in accordance with any one of the preceding Claims and a pump unit (24) that is in flow connection or is bringable into flow connection with the supply channel (124) of the switching apparatus (14; 190).

## Revendications

1. Dispositif de commutation pour outils à haute pression,
comprenant un système de retenue (32) et deux outils à haute pression (36) ou plus aux fins de nettoyage,
un système d'entraînement (88) et un corps rotatif (90) pouvant être amené en rotation autour d'un axe de rotation (94) par rapport au système de retenue (32) au moyen de celui-ci, un système de déplacement (34), avec lequel sélectivement l'un des outils à haute pression (36) peut être amené d'une position non opérationnelle dans une position de fonctionnement, position de fonctionnement dans laquelle l'outil à haute pression (36) est accouplé de manière solidaire en rotation au corps rotatif (90) et peut être entraîné en rotation autour d'un axe d'outil (70) par l'intermédiaire de celui-ci,
dans lequel le dispositif de commutation (14 ; 190) comprend ou réalise un canal d'amenée (124) pour un liquide de nettoyage mis sous pression et l'outil à haute pression (36) respectif comprend ou réalise un canal d'outil (68) pour le liquide de nettoyage, qui lors du fonctionnement est ou peut être amené en liaison fluidique avec le canal d'amenée (124),
dans lequel le dispositif de commutation (14 ; 190) comprend en outre un système de soupape (152), avec lequel le canal d'amenée (124) peut être libéré et peut être fermé sélectivement, et
dans lequel le canal d'amenée (124) est formé au moins sur certaines parties dans le corps rotatif (90),
**caractérisé en ce**
**que** le système de soupape (152) est disposé sur le corps rotatif (90).

2. Dispositif de commutation selon la revendication 1, **caractérisé en ce que** le dispositif de commutation (14 ; 190) comprend un passage tournant (154) pour le liquide de nettoyage du système de retenue (32) à l'outil à haute pression (36), dans lequel le passage tournant (154) peut être libéré ou peut être bloqué de manière ciblée pour l'amenée du liquide de nettoyage avec le système de soupape (152) disposé sur le corps rotatif (90).

3. Dispositif de commutation selon l'une quelconque des revendications précédentes, **caractérisé en ce que** le système de soupape (152) est compris par le corps rotatif (90) ou est disposé au moins en partie dans le corps rotatif (90).

4. Dispositif de commutation selon l'une quelconque des revendications précédentes, **caractérisé en ce que** le corps rotatif (90) est orienté de manière coaxiale par rapport à l'outil à haute pression (36) dans la position de fonctionnement de celui-ci, dans lequel de préférence la partie (122) du canal d'amenée (124) formée dans le corps rotatif (90) est orientée de manière coaxiale par rapport au canal d'outil (68).

5. Dispositif de commutation selon l'une quelconque des revendications précédentes, **caractérisé en ce que** le système de soupape comprend un corps de commande (156), qui est mobile par rapport au corps rotatif (90) et dans une position de base fermant le canal d'amenée (124) s'applique sur un élément d'appui (128) du corps rotatif (90) et dans une position d'orientation est soulevé de l'élément d'appui (128), dans lequel le corps de commande (156) comprend ou réalise un corps de soupape (172) ou un tel est disposé sur le corps de commande (156), qui s'applique dans la position d'orientation de celui-ci de manière étanche sur un siège de soupape (86) du canal d'outil (68) et dans la position de base est soulevé de ce siège de soupape (86), dans lequel de préférence le corps de commande (156) peut être amené au moyen du liquide de nettoyage mis sous pression dans la position d'orientation.

6. Dispositif de commutation selon la revendication 5, **caractérisé en ce que** le corps de commande (156) peut être amené à l'encontre de l'action d'un système de rappel (166) de la position d'étanchéité dans la position d'orientation, dans lequel le système de rappel (166) comprend ou forme de préférence un élément de rappel (168) déformable élastiquement.

7. Dispositif de commutation selon l'une quelconque des revendications 5 ou 6, **caractérisé en ce que** le système de soupape (152) comprend ou réalise un corps de soupape (176), qui est mobile par rapport au corps de commande (156), dans lequel le corps de soupape (176) dans une position d'étanchéité fermant le canal d'amenée (124) s'applique de manière étanche ou sensiblement de manière étanche sur un siège de soupape (178) du corps de commande (156) et dans une position de libération est soulevé du siège de soupape (138) de manière à libérer le canal d'amenée.

8. Dispositif de commutation selon l'une quelconque des revendications précédentes, **caractérisé en ce que** le dispositif de commutation (14 ; 190) comprend au moins un système de palier (108, 110), dans lequel le corps rotatif (90) est monté directement ou indirectement de manière rotative par rapport au système de retenue (32) par l'intermédiaire du au moins un système de palier (108, 110).

9. Dispositif de commutation selon l'une quelconque des revendications précédentes, **caractérisé en ce que** le dispositif de commutation (14 ; 190) comprend au moins un système de palier (76, 78), dans lequel l'outil à haute pression (36) est monté directement ou indirectement de manière rotative par rapport au système de déplacement (34) par l'intermédiaire de l'au moins un système de palier (76, 78) .

10. Dispositif de commutation selon l'une quelconque des revendications précédentes, **caractérisé en ce qu'**au moins un système de palier (76, 78, 108, 110) comprend ou forme un palier radial et/ou un palier axial par rapport à l'axe de rotation (94) et/ou l'axe d'outil (70).

11. Dispositif de commutation selon l'une quelconque des revendications précédentes, **caractérisé en ce qu'**un premier système de palier (76) et un deuxième système de palier (108) sont prévus, qui sont conçus sous la forme de paliers axiaux placés les uns contre les autres ou comprennent de tels, dans lequel les systèmes de palier (76, 108) sont de préférence des roulements à rouleaux coniques (80, 112).

12. Dispositif de commutation selon l'une quelconque des revendications précédentes, **caractérisé en ce que** le système d'entraînement (88) comprend un élément d'entraînement (114) accouplé de manière solidaire en rotation au corps rotatif (90), qui peut être sollicité avec une force d'entraînement par l'intermédiaire d'une unité d'entraînement (120).

13. Dispositif de commutation selon l'une quelconque des revendications précédentes, **caractérisé en ce que** le système de retenue (32) comprend un corps de base (38), dans lequel un logement (52) pour le corps rotatif (90) et le système de soupape (152) est formé, et que le corps rotatif (90) est monté de manière à pouvoir être amené en rotation par rapport au corps de base (38) directement ou indirectement par l'intermédiaire d'au moins un système de palier (108, 110) .

14. Dispositif de commutation selon l'une quelconque des revendications précédentes, **caractérisé en ce que** les deux outils à haute pression (36) ou plus forment un premier groupe d'outils à haute pression (36) du dispositif de commutation (14 ; 190), et que le dispositif de commutation (14 ; 190) comprend un autre groupe de deux outils à haute pression (36) ou plus, auxquels est associé un autre corps rotatif (90) pouvant tourner autour d'un autre axe de rotation (94) par rapport au système de retenue (32) au moyen du système d'entraînement (88), dans lequel au moyen du système de déplacement (34) sélectivement l'un des outils à haute pression (36) de l'autre groupe d'outils à haute pression (36) peut être amené d'une position non opérationnelle dans une position de fonctionnement, position de fonctionnement dans laquelle l'outil à haute pression (36) est accouplé de manière solidaire en rotation à l'autre corps rotatif (90) et peut être entraîné en rotation autour d'un autre axe de rotation (70) par l'intermédiaire de celui-ci, dans lequel le dispositif de commutation (14 ; 190) comprend ou réalise un autre canal d'amenée (124) pour le liquide de nettoyage mis sous pression et l'outil à haute pression (36) respectif de l'autre groupe d'outils à haute pression (36) comprend ou réalise un canal d'outil (68) pour le liquide de nettoyage, qui lors du fonctionnement est ou peut être amené en liaison fluidique avec l'autre canal d'amenée (124), dans lequel le dispositif de commutation (14 ; 190) comprend en outre un autre système de soupape (152), avec lequel l'autre canal d'amenée (124) peut être libéré et peut être fermé sélectivement, dans lequel l'autre canal d'amenée (124) est formé au moins sur certaines parties dans l'autre corps rotatif (90) et l'autre système de soupape (152) est disposé sur l'autre corps rotatif (90).

15. Dispositif de nettoyage, comprenant au moins un dispositif de commutation (10) selon l'une quelconque des revendications précédentes et un groupe de pompage (24), qui est ou peut être amené en liaison fluidique avec le canal d'amenée (124) du dispositif de commutation (14 ; 190).
